# EUROPÄISCHE PATENTSCHRIFT

(11) **EP 3 495 176 B1**
(45) Veröffentlichungstag und Bekanntmachung des Hinweises auf die Patenterteilung: **18.03.2020**
(21) Anmeldenummer: 18206944.3
(22) Anmeldetag: 27.03.2015
(51) Int. Cl.: B60G 17/052, B60G 17/015, B60G 99/00, B62D 33/06

(54) **STEUEREINRICHTUNG UND NUTZFAHRZEUG-DRUCKLUFTANLAGE**
CONTROL DEVICE AND COMMERCIAL VEHICLE COMPRESSED AIR INSTALLATION
DISPOSITIF DE COMMANDE ET INSTALLATION DE COMPRESSION D'AIR DE VÉHICULE UTILITAIRE

(43) Veröffentlichungstag der Anmeldung: 12.06.2019
(62) Teilanmeldung aus: 15161503.6
(73) Patentinhaber: Haldex Brake Products Aktiebolag, 261 24 Landskrona (SE)
(72) Erfinder: Heer, Siegfried, 69168 Wiesloch (DE); Seglö, Fredrik, 26362 Viken (SE)
(74) Vertreter: REHBERG HÜPPE + PARTNER

(56) Entgegenhaltungen:
- DE-A1- 10 326 675
- DE-A1-102008 039 170
- US-A1- 2013 328 277
- US-A1- 2014 375 002
- US-B1- 7 871 081

## Beschreibung

### TECHNISCHES GEBIET DER ERFINDUNG

Die Erfindung betrifft eine Steuereinrichtung, mittels welcher eine automatische Niveauregelung eines Luftfederbalgs erfolgen kann. Des Weiteren betrifft die Erfindung eine Nutzfahrzeug-Druckluftanlage.

### STAND DER TECHNIK

In Nutzfahrzeugen finden Luftfederbälge Einsatz für die Abstützung eines Chassis des Zugfahrzeugs und Anhängers gegenüber den Fahrzeugrädern im Bereich der einzelnen Achsen. Darüber hinaus finden Luftfederbälge in Nutzfahrzeugen Einsatz zum Abstützen einer Fahrerkabine gegenüber dem Chassis und/oder zur Abstützung eines Fahrzeugsitzes gegenüber der Fahrerkabine. Ein Belüften, Entlüften und Absperren der Luftfederbälge zum Konstanthalten oder Verändern eines Niveaus oder einer "Federauslenkung" erfolgt über Ventile, welche entsprechend eine manuellen Vorgabe eines Bedieners und/oder automatisch über eine Niveauregelung betätigt werden. Zunehmend Einsatz finden hierbei elektronische Steuereinrichtungen, welche auf Grundlage von elektrischen Signalen (wie einem manuell vorgegebenen elektrischen Betätigungssignal und/oder einem gemessenen elektrischen Messsignal des Niveaus oder Drucks eines Luftfederbalgs oder einer Last oder Beladung) die Ventile ansteuern, was mittels direkt angesteuerter Magnetventile oder elektropneumatisch vorgesteuerter Ventile erfolgen kann.

DE 195 46 324 C2 offenbart eine als Steuerblock bezeichnete Baueinheit für eine Luftfederungsanlage, welche einen Anschluss für eine elektrische Versorgung, einen Anschluss für eine Druckluftversorgung sowie Anschlüsse für unterschiedlichen Achsen des Nutzfahrzeugs zugeordnete Luftfederbälge besitzt. In die Baueinheit ist eine elektronische Steuereinrichtung mit einer Platine und den erforderlichen Schaltelemente und Schaltkreisen integriert. Mittels der elektronischen Steuereinrichtung werden Magnetventile angesteuert, welche die Be- und Entlüftung der Anschlüsse und damit der zugeordneten Luftfederbälge steuern. In der Baueinheit sind über Magnetventile be- und entlüftbare Luftfederbälge einer Vorderachse des Nutzfahrzeugs über eine Querdrossel miteinander verbunden, welche in begrenztem Umfang einen Austausch der Luft zwischen den Luftfederbälgen der rechten und linken Seite der Vorderachse ermöglichen. Weitere Anschlüsse sowie Magnetventile der Baueinheit sind der Ansteuerung von Tragbälgen sowie einem Liftbalg einer Liftachse zugeordnet. In die Baueinheit sind des Weiteren Drucksensoren zur Erfassung der Drücke an den pneumatischen Anschlüssen integriert.

DE 102 45 815 A1 offenbart eine Baueinheit mit integrierter elektronischer Steuereinrichtung, einem Anschluss für einen Datenaustausch, einem Vorsteuermagnetventil und einem Drucksensor, wobei eine derartige Baueinheit zur Be- und Entlüftung eines einzigen Luftfederbalgs bestimmt sein kann. Ebenfalls vorgeschlagen wird, in einer größeren Baueinheit drei entsprechende Ventileinrichtungen in Reihe nebeneinander anzuordnen. Auf diese Weise kann ein Liftachsmodul mit elektropneumatisch vorgesteuertem 3/2-Wege-Magnetventil sowie zwei elektropneumatisch vorgesteuerten 2/2-Wege-Magnetventilen, ein Hinterachs-Modul mit entsprechenden integrierten Magnetventilen und ein Vorderachs-Modul mit einem elektropneumatisch vorgesteuerten 3/2-Wege-Magnetventil mit einer die Luftfederbälge der Vorderachse über eine Drossel verbindenden Schaltstellung sowie einer die beiden Luftfederbälge gemeinsam belüftenden oder entlüftenden Schaltstellung gebildet sein.

Gemäß EP 1 464 556 B1 kann eine Baueinheit, welche eines oder mehrere Ventile einer Luftfederungsanlage aufnimmt und über Anschlüsse mit den Luftfederbälgen der einzelnen Achsen des Nutzfahrzeugs zwecks Be- und Entlüftung der zugeordneten Luftfederbälge verbunden ist, zusammengefasst sein mit einer Druckluftaufbereitungseinrichtung. Die Druckluftaufbereitungseinrichtung verfügt über Ventile für einen Druckregler, einen Lufttrockner und Mehrkreisschutzventile sowie eine elektronische Steuereinheit, die multifunktional sowohl der Ansteuerung der Luftaufbereitungseinrichtung als auch der Ansteuerung der Ventile der Luftfederungsanlage dienen kann.

EP 1 502 778 B1 offenbart eine modulare Gestaltung einer Luftaufbereitungseinrichtung, wobei ein erstes Modul den Lufttrockner, den Druckregler und ein Regenerationsventil, ein zweites Modul das Mehrkreisschutzventil und Drucksensoren zur Erfassung der Drücke in den Verbraucherkreisen, ein drittes Modul die elektronische Steuereinheit sowie elektrisch ansteuerbare Vorsteuerventile sowie ein viertes Modul die pneumatisch ansteuerbaren Ventile der Luftfederungsanlage und ein fünftes Modul die elektrisch angesteuerten Vorsteuerventile, über welche einerseits die Kreisschutzventile des zweiten Moduls und andererseits die Ventile der Luftfederungsanlage des vierten Moduls angesteuert werden, beinhalten kann. Anstelle des Einsatzes elektropneumatisch vorgesteuerter Ventile können auch direkt elektrisch gesteuerte Ventile Einsatz finden. Die einzelnen Module sind zu einer gemeinsamen Baueinheit zusammensetzbar, wobei beim Zusammenfügen der einzelnen Module sowohl die erforderlichen pneumatischen wie auch die elektrischen Leitungsverbindungen hergestellt werden. Die Module sind hierbei einzeln austauschbar.

DE 10 2004 035 691 A1 offenbart eine zwischen einen Vorratsbehälter und Luftfederbälge einer Luftfederungsanlage zwischengeordnete Baueinheit, in welche ein Wegsensor zur Erfassung eines Niveaus eines Luftfederbalgs sowie ein Drucksensor zur Erfassung des Drucks in den Luftfederbälgen integriert ist. Um sowohl die elektrische Steuerung des Be- und Entlüftens der Luftfederbälge als auch die manuelle Steuerung des Be- und Entlüftens über manuelle Betätigungselemente zu ermöglichen, verzweigt in der Baueinheit die Verbindung zwischen dem Vorratsbehälter und den Luftfederbälgen in einen elektronisch gesteuerten Leitungszweig, in welchem ein elektronisch gesteuertes 2/2-Wege-Magnetventil und ein 3/2-Wege-Magnetventil hintereinander geschaltet sind, und einen manuell über die Betätigungselemente gesteuerten Leitungszweig mit einem manuell betätigten 2/2-Wege-Ventil sowie einem manuell betätigten 3/2-Wegeventil. Alternativ wird vorgeschlagen, in einem einzigen Leitungszweig sowohl elektronisch als auch manuell betätigbare Ventile einzusetzen, alternativ elektronisch oder manuell betätigte vorsteuernde Ventile einzusetzen oder ein belüftendes und entlüftendes Relaisventil einzusetzen, welches sowohl elektronisch als auch manuell vorgesteuert ist.

DE 10 2005 026 344 B4 offenbart die Zusammenfassung eines Moduls mit elektropneumatisch vorgesteuerten Ventilen für eine Luftfederungsanlage mit einer Druckluftaufbereitungseinrichtung mit einem Anflanschen der beiden Module. Hierbei ist eine kabelgebundene Fernbedienung über einen Zentralstecker an eine gemeinsame elektronische Steuereinheit angebunden.

EP 2 813 416 A2 offenbart eine Kabinenluftfederungs-Ventileinheit mit einer integrierten elektronischen Steuereinheit sowie von dieser angesteuerten Magnetventilen, über welche die Be- und Entlüftung einerseits von Luftfederbälgen zwischen dem Chassis und einer Fahrerkabine sowie andererseits eines Luftfederbalgs zwischen einem Fahrzeugsitz und der Fahrerkabine steuerbar ist. Hierbei kann die Kabinenluftfederungs-Ventileinheit mit der elektronischen Steuereinheit als eine singuläre Baueinheit oder als modulare Baueinheit ausgebildet sein.

Die nicht vorveröffentlichte europäische Patentanmeldung DE 10 2014 109 593.6 offenbart eine Druckluftanlage mit einer Chassis-Luftfederungsanlage sowie einer Kabinen-Luftfederungsanlage, wobei optional die Chassis-Luftfederungsanlage mit einem Vorderachsmodul sowie einem Hinterachsmodul ausgebildet sein kann. Für die Steuerung der Chassis-Luftfederungsanlage einerseits und der Kabinen-Luftfederungsanlage findet eine gemeinsame elektronische Steuereinheit Einsatz, welche Bestandteil der Chassis-Luftfederungsanlage oder der Kabinen-Luftfederungsanlage sein kann. Hierbei erfolgt die koordinierte Ansteuerung der Chassis-Luftfederungsanlage und der Kabinen-Luftfederungsanlage, so dass eine Belüftung oder Entlüftung der Chassis-Luftfederungsanlage in Abstimmung zu der Be- oder Entlüftung der Kabinen-Luftfederungsanlage (oder umgekehrt) erfolgt.

Weiterer Stand der Technik zur Ausbildung von Nutzfahrzeug-Druckluftanlagen ist aus EP 1 650 061 B1, EP 1 741 478 B1, DE 10 2008 045 213 A1 und DE 10 2008 051 205 A1 bekannt.

Weitere Druckschriften betreffen die Ausgestaltung der Kommunikation einzelner Komponenten eines Nutzfahrzeugs:
DE 10 2008 039 170 A1 beschreibt die Kommunikation einzelner Komponenten eines Nutzfahrzeugs. Hierbei ist eine Steuereinheit eines elektronischen Bremssystems über einen CAN-Sensorbuszweig mit einem Lenkwinkelsensor und einem Beschleunigungssensor verbunden, mit einem Fußbremsmodul verbunden, über einen CAN J1939 Buszweig mit einer Steuereinheit einer Luftfederungsanlage, einer Steuereinheit einer Luftaufbereitungsanlage und einer Steuereinheit eines Retarders, einem Anhängersteuermodul und 1-Kanal bzw. 2-Kanal-Puls-Code-Modulationseinheiten verbunden, so dass bei kompatiblen derart vernetzten Einheiten, unter Umständen desselben Herstellers, eine leitungsgebundene bzw. busgebundene Kommunikation erfolgen kann. Zusätzlich sollen die Steuereinheiten für die Luftfederungsanlage und die Luftaufbereitungsanlage mit Funkkommunikationsmodulen mit Sende/Empfangs-Antennen ausgestattet sein, über welche Steuereinheiten, welche von demselben Hersteller stammen, unmittelbar und ohne Zwischenschaltung der Steuereinheit des elektronischen Bremssystems miteinander kommunizieren können. Hierbei kann die Funkkommunikation als drahtlose Übertragung mittels WLAN, als Bluetooth-Verbindung oder mittels einer Eigenentwicklung bzw. einem proprietären Übertragungsprotokoll in einem freigegebenen Funkfrequenzband, bspw. dem 2,4 GHz-Band oder -Bereich, erfolgen. Möglich ist, dass eine mit einer Funkkommunikationsfähigkeit versehene Komponente mehrere Funkkommunikationsarten bereitstellt und diese gleichzeitig, wahlweise oder mehrfach wahlweise betreiben kann. So soll bspw. zwischen zwei oder mehr nahe beieinander angeordneten Komponenten energiesparend mittels einer Bluetooth-Verbindung kommuniziert werden, während zwischen weiter entfernten Komponenten, bspw. einer sich in einem längeren Anhängerfahrzeug in der Nähe dessen Achse befindenden Komponente, mittels WLAN mit höherer Sendeleistung kommuniziert werden. Die derart kommunizierenden Teileinheiten tauschen nach der Erkennung vordefinierte Daten aus, die der Durchführung des Kommunikationsprotokolls, der verbesserten Abstimmung des Nutzfahrzeugs oder Nutzfahrzeugzugs durch zusätzlich übertragene Daten zwischen Komponenten und Systemen desselben Herstellers und einer automatischen Konfiguration dieser Komponenten und Systeme mittels der zusätzlich übertragenen Daten dienen sollen. Möglich ist auch der Aufbau einer Funkkommunikation zwischen einem Zugfahrzeug und einem Anhänger, hier zwischen einem EBS-Steuergerät des Zugfahrzeugs und einer Steuereinheit des Anhängers zusätzlich zu der leitungsgebundenen Kopplung des Anhängers mit dem Zugfahrzeug.

Gemäß DE 101 37 149 A1 sind über einen Datenbus mehrere Steuergeräte eines Fahrzeugs miteinander verbunden, wobei ein Steuergerät einer elektronischen Luftfederungsanlage zwecks Gewährleistung einer Verstellung eines Niveaus zugeordnet sein kann. In dieses Steuergerät ist ein Sende-/Empfangsmodul integriert, welches einen Datenaustausch über Funk mit einem Mobiltelefon und/oder einer Relaisstation einer Spedition oder Reparaturwerkstatt ermöglicht. Die Kommunikation soll hierbei wesentliche Sicherheitskriterien wie eine zuverlässige Datenverbindung und das Ausschließen von Störeinflüssen oder einer unberechtigten Bedienung durch fremde Mobiltelefonbenutzer sowie der Gefahr des Verlierens des Fernbedienungsteils gewährleisten. Hierzu prüft das Steuergerät die mit dem Rufaufbau übertragene Telefonnummer des anrufenden Geräts und lässt ausschließlich eine Kommunikation mit als zulässige Kommunikationsgeräte erkannten Geräten zu, während Geräte mit unbekannten übertragenden Telefonnummern abgewiesen werden. Wird das Mobiltelefon von dem Fahrer außerhalb des Fahrzeugs liegengelassen, bricht unter Umständen die unmittelbare Telefonverbindung zwischen dem Mobiltelefon und dem Sende-/Empfangsmodul ab, was dem Fahrer mittels einer Warnlampe angezeigt werden kann. Des Weiteren kann den Steuergeräten ein eigener PIN-Code zugeordnet sein, welcher bei der Anmeldung eines Mobiltelefons abgefragt werden kann. Bei einem ersten Anruf eines Mobiltelefons kann eine für den Datenaustausch erforderliche Betriebssoftware für das Mobiltelefon vom Steuergerät über das Sende-/Empfangsmodul an das Mobiltelefon übertragen werden. Alternativ kann die Betriebssoftware über die Relaisstation aus dem Internet heruntergeladen werden. Möglich ist, dass das Sende-/Empfangsmodul in einem separaten Gehäuse an einer Stelle des CAN-Busses angeordnet ist, an der ein guter Empfang vorhanden ist. Über das Display des Mobiltelefons kann eine Überwachung des Betriebszustands, bspw. hinsichtlich Störungen und Fehlern des Steuergeräts, überwacht und angezeigt werden. Beispielsweise kann ein Nutzfahrzeug beim Einfahren in ein Speditionsgelände die gefahrene Kilometerleistung, einen Systemfehler und anstehende Wartungsinformationen drahtlos einer zuständigen Werkstatt oder der Speditionsverwaltung zusammen mit diversen anderen Fahrzeugdaten wie Fahrzeughalter, Mieter, Fracht usw. mitteilen. Möglich ist auch eine Fernabfrage. Über den Datenaustausch zwischen dem Mobiltelefon und dem Steuergerät kann auch die Ansteuerung eines mechanischen Aktuators, insbesondere einer Niveauverstelleinrichtung einer elektronisch gesteuerten Luftfederungsanlage, erfolgen.

Auch DE 199 05 172 A1 offenbart eine Funkfernbedienung für eine elektronisch gesteuerte Luftfederungsanlage eines Nutzfahrzeugs mit einer Sende-/Empfangseinheit des Nutzfahrzeugs und einer Sende-/Empfangseinheit einer Fernbedienung. Auch DE 10 2004 037 707 B4 widmet sich der Aufgabe, ein drahtloses Fernbediensystem vorzuschlagen, welches eine komfortable Bedienung mit einem verringerten Verlustrisiko ermöglichen soll. Hierbei soll über die Fernbedienung die Ansteuerung einer Niveauregulierung einer Luftfederungsanlage insbesondere beim Aufsetzen oder Absetzen von Wechselpritschen, Containern und/oder Aufliegern sowie beim Be- und Entladen des Nutzfahrzeugs, ermöglicht werden. DE 10 2004 050 502 B4 widmet sich einer vergleichbaren Aufgabenstellung und Lösung. Auch DE 11 2010 001 904 T5 beschreibt das manuelle Einwirken auf das Niveau einer Luftfederungsanlage und die Vorgabe spezifischer Funktionen wie eine Höhen-Ladungs- und Antriebskonfiguration der Luftfederungsanlage über eine drahtlose Fernbedienung.

DE 10 2007 048 457 A1 offenbart eine Integration eines Ultraschallsensors mit zugeordneter Platine und Datenspeicher in eine Luftfederbalgeinheit. Über einen Funkempfänger der Luftfederbalgeinheit kann der Datenspeicher mit Kennlinien gefüllt werden. Auf Grundlage der Kennlinien kann eine von dem Ultraschallsensor erfasste Niveauhöhe, die Einfederungsrichtung, die Einfederungsgeschwindigkeit, der Innendruck des Luftfederbalgs und eine aktuelle Traglast ermittelt werden, welche dann an ein Steuergerät übertragen wird.

DE 10 2008 015 732 A1 schlägt vor, eine Luftfederbalgeinheit mit einem Aufsatzteil auszustatten, in welchem die Ventile und Druck sowie Temperatursensoren aufgenommen sind. Eine in dem Luftfederbalg angeordnete Messeinrichtung erfasst das Niveau des Luftfederbalgs. Das Signal der Messeinrichtung wird von einem in dem Luftfederbalg angeordneten Sender drahtlos übertragen an einen in dem Aufsatzteil angeordneten Empfänger. Hierbei kann zwischen dem Sensor und dem Empfänger auch eine drahtlose Energieversorgung erfolgen. Vorzugsweise findet für die Signalübertragung ein RFID-Transponder Einsatz. Das Aufsatzteil verfügt darüber hinaus über eine Auswerteelektronik. Um die Signaldaten und ggf. die Energieversorgung zwischen dem Sender und dem Empfänger zu ermöglichen, sind die im Übertragungsweg angeordneten Bauelemente nicht aus einem metallischen Material hergestellt. Mittels eines RFID-Transponders des Aufsatzteils können Daten des Luftfederbalgs auch nach außen übermittelt werden, womit ein elektronisches Typenschild gebildet werden soll. Hierbei können Daten wie ein Herstellungsdatum, der Typ und die Fahrzeuganwendung des Luftfederbalgs übertragen werden, womit eine logistische Verfolgung und Einzelteilbeschaffung möglich sein kann oder Schaltspiele der in das Aufsatzteil integrierten Ventile gezählt und gespeichert werden können.

Auch DE 20 2010 014 848 U1 offenbart eine manuell betätigte Fernbedienung eines Kraftfahrzeugs, welche vor dem Fahrzeugsitz und in einem Ablagefach angeordnet sein soll. Mittels der Fernbedienung soll durch Betätigung eines Gruppenschalters manuell das Anheben oder Absenken des Niveaus sämtlicher Luftfederbälge veranlasst werden, bspw. je nach Qualität der jeweiligen Fahrbahn. Darüber hinaus kann über Einzelschaltungen manuell auch das Niveau eines einzelnen Luftfederbalgs fein abgestimmt werden. Das Signal der Fernbedienung wird empfangen von einem Kernsteuergerät, welches vier Steuerungsgruppen aufweist, die jeweils einem Luftfederbalg zugeordnet sind. Jede Steuerungsgruppe besitzt ein belüftendes Magnetventil und ein entlüftendes Magnetventil, welche durch die Fernbedienung zur Be- und Entlüftung der zugeordneten Luftfederbälge angesteuert werden.

Weiterer Stand der Technik ist aus US 2014/0375002 A1, DE 10 2008 039 170A1, DE 103 26 675 A1, US 7,871,081 B1, US 2013/0328277 A1, US 2010/0138116 A1 und DE 20 2010 014 848 U1 bekannt. US 2014/0375002 A1 zeigt eine Steuereinrichtung nach dem Oberbegriff des Anspruchs 1 und wird als nächster Stand der Technik angesehen.

### AUFGABE DER ERFINDUNG

Der Erfindung liegt die Aufgabe zugrunde, eine Steuereinrichtung vorzuschlagen, welche veränderte oder erweiterte Steuerungs- und Kommunikationsmöglichkeiten bietet. Des Weiteren liegt der Erfindung die Aufgabe zugrunde, eine entsprechend verbesserte Nutzfahrzeug-Druckluftanlage vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung findet insbesondere Einsatz im Zusammenhang mit einer Luftfederbalgeinheit, welche als singuläre Baueinheit oder modulare Baueinheit ausgebildet sein kann, bei welcher aber insbesondere nicht einzelne Komponenten über frei verlaufende Leitungen miteinander verbunden sind. Die Luftfederbalgeinheit verfügt hierbei über einen Luftfederbalg. Des Weiteren besitzt die Luftfederbalgeinheit eine Ventileinrichtung. Die Ventileinrichtung verfügt über (mindestens) ein Ventil. Das Ventil ist in der Luftfederbalgeinheit mit dem Luftfederbalg verbunden. Über das Ventil kann (mittelbar oder unmittelbar) eine Be- und/Entlüftung des Luftfederbalgs der Luftfederbalgeinheit herbeigeführt werden. Die Luftfederbalgeinheit verfügt über einen drahtlosen Empfänger. Mittels des drahtlosen Empfängers kann ein Steuersignal empfangen werden, welches zur Steuerung des Be- und/oder Entlüftens des Luftfederbalgs durch die Ventileinrichtung herangezogen wird. Gemäß dem eingangs genannten Stand der Technik war einerseits die Ventileinrichtung separat von dem Luftfederbalg ausgebildet, so dass eine be-und/oder entlüftende Leitung von der Ventileinrichtung zu dem Luftfederbalg geführt werden musste. Hingegen können hier die Ventileinrichtung und der Luftfederbalg auch in eine gemeinsame Luftfederbalgeinheit integriert. Andererseits hat der Stand der Technik erfordert, dass eine Luftfederbalgeinheit zwingend
- entweder mit einer elektrischen Steuerleitung zur Übertragung eines Steuersignals,
- oder mit einer pneumatischen Vorsteuerleitung zur Übertragung eines vorsteuernden Drucks zur Umschaltung von pneumatisch vorgesteuerten Ventilen in der Luftfederbalgeinheit
- oder mit einem Anschluss für eine unmittelbar be- und/oder entlüftende Leitung verbunden werden musste. Erfindungsgemäß kann die drahtlose Übertragung des Steuersignals zu dem drahtlosen Empfänger und damit zu der Luftfederbalgeinheit erfolgen. Damit kann ein Anschluss der Luftfederbalgeinheit für ein elektrisches Steuersignal, ein pneumatisches Vorsteuersignal und/oder eine belüftende/entlüftende Leitung entfallen.

Ohne dass dies zwingend der Fall sein muss, kann die Luftfederbalgeinheit lediglich mit
- einem elektrischen Anschluss für eine elektrische Leistungsversorgung,
- einem pneumatischen Anschluss für die Druckluftversorgung sowie
- einem entlüftenden Anschluss
ausgestattet sein.

Eine Lösung der der Erfindung zugrunde liegenden Aufgabe ist gegeben durch eine Steuereinrichtung, welche eine elektronische Steuereinheit aufweist. Die erfindungsgemäße Steuereinrichtung bzw. Steuereinheit ist multifunktional ausgebildet und in eine Druckluftaufbereitungseinrichtung, ein EBS-Steuergerät, ein Kabinenluftfedermodul u. ä. integriert oder von dieser ausgebildet. Erfindungsgemäß verfügt die Steuereinrichtung aber nicht über die Ventile, mittels welcher die Steuerung die Be- und/oder Entlüftung der Luftfederungsanlage erfolgt. Vielmehr ist erfindungsgemäß die elektronische Steuereinheit mit Steuerlogik ausgestattet, mittels welcher eine Erzeugung eines Niveau-Steuersignals erfolgt. Dieses Niveau-Steuersignals wird dann für eine automatische Niveauregelung (mindestens) eines Luftfederbalgs herangezogen. Möglich ist, dass diese automatische Niveauregelung als elektronische Niveauregelung ausgebildet ist, bei welcher das Niveau-Steuersignal auf Grundlage eines elektrischen Niveausignals von der Steuereinheit ermittelt wird. Während gemäß dem Stand der Technik die Übertragung des Niveau-Steuersignals zu einer Ventileinrichtung, mittels welcher eine Be- und/oder Entlüftung des Luftfederbalgs herbeigeführt werden kann, über eine elektrische Steuerleitung oder eine pneumatische Vorsteuerleitung erfolgt, besitzt erfindungsgemäß die Steuereinrichtung einen Sender. Über den Sender kann das Niveau-Steuersignal drahtlos an einen beabstandet angeordneten Empfänger, insbesondere einen Empfänger einer Ventileinrichtung zum Be- und/oder Entlüften des Luftfederbalgs oder einen Empfänger einer Luftfederbalgeinheit, wie diese zuvor erläutert worden ist, übertragen werden.

Eine weitere Lösung der der Erfindung zugrunde liegenden Aufgabe ist gegeben für eine Nutzfahrzeug-Druckluftanlage, in welcher
- eine Luftfederbalgeinheit wie zuvor erläutert oder
- eine Ventileinheit mit mindestens einem Ventil, welches mit mindestens einem Luftfederbalg verbunden ist und über welches mindestens ein Luftfederbalg be- und/oder entlüftet werden kann,
eingesetzt ist. Hierbei weist ggf. die Ventileinheit einen drahtlosen Empfänger zum Empfangen eines Steuersignals zur Steuerung des Be- und/oder Entlüftens mindestens eines Luftfederbalgs auf. Des Weiteren verfügt die erfindungsgemäße Nutzfahrzeug-Druckluftanlage über eine Steuereinrichtung, wie diese zuvor erläutert worden ist. Für die Nutzfahrzeug-Druckluftanlage überträgt der Sender der Steuereinrichtung das Steuersignal an den Empfänger der Luftfederbalgeinheit oder der Ventileinheit, womit eine drahtlose Kommunikation ermöglicht ist und insbesondere eine drahtgebundene Steuerleitung oder eine vorsteuernde pneumatische Leitungsverbindung entfallen kann.

Für eine bevorzugte Weiterbildung ist die Steuereinheit der Steuereinrichtung mit Steuerlogik ausgestattet, welche mehrere Niveau-Steuersignale für mehrere Luftfederbälge erzeugt. Somit kann mittels einer Steuereinheit der Steuereinrichtung die Ansteuerung mehrerer oder sämtlicher Luftfederbälge erfolgen. Hierbei können bspw. unterschiedliche Niveau-Steuersignale für Luftfederbälge einzelner Seiten und/oder Achsen des Nutzfahrzeugs (Anhängers oder Zugfahrzeugs) ermittelt werden, wobei auch ein Niveau-Steuersignal für eine Liftachse (hier insbesondere die Tragbälge und/oder Luftbälge) von der Steuereinheit ermittelt werden kann.

Während durchaus möglich ist, dass die unterschiedlichen erzeugten Niveau-Steuersignale separat, bspw. über mehrere Sender, übertragen werden, schlägt die Erfindung für eine weitere Ausführungsform vor, dass die Steuereinheit der Steuereinrichtung aus den mehreren Niveau-Steuersignalen ein einziges gemeinsames Signal erzeugt. Um lediglich einige nicht beschränkende Beispiele zu nennen, kann das Signal mit einem Protokoll die unterschiedlichen Niveau-Steuerinformationen oder -Signale mit unterschiedlichen, den jeweiligen Luftfederbälgen zugeordneten Kennzeichnungen voneinander unterscheiden. In diesem Fall überträgt der Sender der Steuereinrichtung das Signal mit den mehreren Niveau-Steuersignalen für die unterschiedlichen Luftfederbälge, womit der Sendeaufwand reduziert ist. Ein derart gesendetes Signal gelangt dann zu mehreren Luftfederbälgen oder auch zu einer Ventileinheit oder mindestens einer Luftfederbalgeinheit. In der Luftfederbalgeinheit oder der Ventileinheit ist dann eine Steuereinheit vorhanden (welche auch multifunktional für andere Zwecke eingesetzt sein kann), die mit Steuerlogik ausgestattet ist, welche aus dem Signal mit den mehreren Steuersignalen das für die Luftfederbalgeinheit oder die Ventileinheit relevante Steuersignal ermittelt. Somit holt sich für diese Ausgestaltung jede Luftfederbalgeinheit oder Ventileinheit aus dem Signal die jeweils relevante Information, wozu die Ventileinheit oder Luftfederbalgeinheit eine zugeordnete Kennzeichnung besitzen kann, welche auch in dem Signal das jeweilige zugeordnete Steuersignal kennzeichnet. Die Steuereinheit der Ventileinheit oder Luftfederbalgeinheit berücksichtigt dann nur das Steuersignal, dessen Kennzeichnung mit der Kennzeichnung der Ventileinheit oder Luftfederbalgeinheit übereinstimmt.

Im einfachsten Fall ist in der Nutzfahrzeug-Druckluftanlage die Luftfederbalgeinheit ausschließlich mit einem Empfänger zum Empfang eines Steuersignals ausgestattet. In weiterer Ausgestaltung der Erfindung besitzt die Luftfederbalgeinheit oder Ventileinheit aber auch einen Sender. Dieser Sender kann einer drahtlosen Übertragung eines Betriebszustands der Luftfederbalgeinheit dienen. Um lediglich einige nicht beschränkende Beispiele für einen derart übertragenden Betriebszustand der Luftfederbalgeinheit zu nennen, kann mittels des Senders ein Drucksignal eines Drucksensors übertragen werden, der den Druck in den Luftfederbalg erfasst. Alternativ oder kumulativ kann eine Übertragung eines Wegsignals eines Wegsensors erfolgen, der das Niveau des Luftfederbalgs erfasst. Alternativ oder zusätzlich kann das Signal eines Sensors übertragen werden, welcher eine Ventilstellung mindestens eines Ventils der Ventileinrichtung der Luftfederbalgeinheit erfasst. Damit kann die Luftfederbalgeinheit ihren Betriebszustand an beabstandete andere Komponenten der Druckluftanlage, insbesondere die Steuereinrichtung, übertragen. Möglich ist hierbei auch, dass die empfangende Steuereinrichtung einen Empfänger aufweist, mittels dessen drahtlos ein Betriebszustand der Luftfederbalgeinheit, eines Luftfederbalgs und/oder mindestens eines Ventils zum Be- und/oder Entlüften des Luftfederbalgs empfangen werden kann. Auf diese Weise kann in der Steuereinrichtung, insbesondere bei der Erzeugung des Niveau-Steuersignals, ein derartiger Betriebszustand berücksichtigt werden. Auch für die Übertragung des zuvor genannten mindestens einem Betriebszustands kann erfindungsgemäß eine zusätzliche Leitung eingespart werden. Möglich ist, dass entsprechend den vorangegangenen Ausführungen auch mehrere Informationen oder Signale in einem gemeinsamen entsprechend kodierten Signal von dem Sender zu dem Empfänger übertragen werden.

Durchaus möglich ist, dass eine erfindungsgemäße Luftfederbalgeinheit oder eine anderweitige, über einen Empfänger mit einem drahtlos übertragenen Steuersignal angesteuerte Ventileinheit ausschließlich mit einem Luftfederbalg zu dessen Be- und/oder Entlüftung verbunden ist. Für eine Ausgestaltung ist aber die Luftfederbalgeinheit oder die Ventileinheit mit zwei Luftfederbälgen verbunden. Hierbei sind die Anschlüsse für diese beiden Luftfederbälge unterschiedlichen Achsen und/oder unterschiedlichen Seiten des Nutzfahrzeugs zugeordnet. Somit kann über die Ventileinrichtung der Ventileinheit oder Luftfederbalgeinheit die Ansteuerung von zumindest zwei Luftfederbälgen erfolgen, womit die Luftfederbalgeinheit oder die Ventileinheit multifunktional ausgebildet ist und unter Umständen eine Reduzierung des Bauraums und/oder der erforderlichen pneumatischen Komponenten erfolgt. Hierbei ist auch möglich, dass die beiden Anschlüsse für die Luftfederbälge in der Luftfederbalgeinheit oder der Ventileinheit über eine integriere Drossel miteinander verbunden sind, welche je nach Drosselwirkung zeitlich verzögert einen Ausgleich der Drücke in den beiden Luftfederbälgen gewährleistet, was insbesondere von Vorteil ist, wenn die beiden Luftfederbälge unterschiedlichen Seiten des Nutzfahrzeugs zugeordnet sind. Hierbei kann die genannte Drossel permanent wirksam sein oder nur in einer Schaltstellung eines Ventils wirksam sein.

Die Luftfederbalgeinheit oder die Ventileinheit kann bspw. einem Fahrzeugrad, einer Fahrzeugachse oder einer Fahrzeugseite zugeordnet sein. Für einen besonderen Vorschlag ist mit der Luftfederbalgeinheit oder der Ventileinheit eine Liftachseinheit, insbesondere eine Liftbalgeinheit und/oder eine Tragbalgeinheit, gebildet. In diesem Fall erfolgt drahtlos die Übertragung eines Steuersignals, mittels welchem bspw. die Liftachse aktiviert und deaktiviert werden kann und/oder die pneumatische Beaufschlagung der Tragbälge der Liftachse gesteuert wird.

Möglich ist durchaus, dass in der Nutzfahrzeug-Druckluftanlage weitere Sensoren angeordnet sind, deren Messsignal ebenfalls drahtlos übertragen wird. Für den Fall, dass die drahtlose Übertragung dieses Messsignals durch den Sensor lediglich mit einer kleinen oder nicht ausreichenden Übertragungsweite erfolgt, kann vorzugsweise der oder ein Empfänger der Luftfederbalgeinheit, der Ventileinheit oder der Steuereinrichtung zum drahtlosen Empfangen eines Messsignals ausgebildet sein. Dieses empfangene Messsignal wird dann einer oder der Steuereinheit zugeführt. Die Steuereinheit ist mit Steuerlogik ausgestattet, welche das Messsignal verarbeitet und/oder über den oder einen Sender an eine andere Baueinheit aussendet. In diesem Fall bildet somit die Steuereinheit der Luftfederbalgeinheit, der Ventileinheit oder der Steuereinrichtung eine Art "Transmitter", Verstärker oder eine Weitersendeeinrichtung für das Messsignal des Sensors, womit eine Leistungsaufnahme des Sensors für die Übertragung des Messsignals reduziert werden kann und auch eine Reduzierung der Baugröße des Sensors mit der Sendeeinrichtung erfolgen kann. Beispielsweise kann auf diese Weise ein Reifendrucksignal einer in das Fahrzeugrad integrierten Reifendrucküberwachungseinheit, ein Balgdrucksignal und/oder ein Niveausignal eines entsprechenden Sensors empfangen und übertragen werden.

Durchaus möglich ist, dass die drahtlos übertragenen Steuersignale ausschließlich automatisch von einer Steuereinheit erzeugt werden. Sofern aber auch ein manuelles Einwirken auf die Luftfederbälge, insbesondere ein willkürliches Heben und/oder Senken des Fahrzeugaufbaus, durch Veranlassung durch den Fahrer gewünscht ist, kann die Luftfederbalgeinheit, die Ventileinheit oder die Steuereinrichtung mindestens ein manuelles Betätigungselement aufweisen, wie dieses insbesondere ansonsten bei üblichen aus dem Stand der Technik bekannten, so genannten "Hebe-Senk-Ventilen" bekannt ist. Mit Betätigung des manuellen Betätigungselements durch den Fahrer wird ein elektrisches Betätigungssignal erzeugt, welches dann über den Sender als Steuersignal übertragen wird.

Durchaus möglich ist, dass die die Steuereinheit ausbildende Baueinheit unmittelbar den Sender und/oder Empfänger beinhaltet oder trägt. Dies hat zur Folge, dass die Sendeleistung derart bemessen sein muss, dass eine Übertragung des Steuersignals zumindest über den Abstand erfolgt, welchen die den Sender aufweisende Baueinheit von der den Empfänger aufweisenden Baueinheit hat. Für einen weiteren Vorschlag der Erfindung ist mindestens ein Sender und/oder Empfänger beabstandet von der zugehörigen Steuereinheit angeordnet und über eine kabelgebundene Leitung mit der zugeordneten Steuereinheit verbunden. Je nach Länge der Leitung kann dann die Entfernung zwischen Sender und Empfänger soweit reduziert werden, dass eine zuverlässige Übertragung des Steuersignals von dem Sender zum Empfänger möglich ist.

Weitere Aspekte der Erfindung widmen sich der Parametrierung der an den Austausch der drahtlos übertragenen Signale beteiligten Bauelemente:
Gemäß einem Vorschlag der Erfindung ist die Steuereinheit mit Steuerlogik ausgestattet, mittels welcher eine Parametrierung der Luftfederbalgeinheit, der Steuereinrichtung oder der Ventileinheit der Nutzfahrzeug-Druckluftanlage erfolgt. So kann bspw. mittels der Parametrierung jeder Luftfederbalgeinheit, der Ventileinheit oder der Steuereinrichtung eine individuelle Kennzeichnung zugewiesen werden. Einerseits kann dann das Steuersignal, welches für diese Luftfederbalgeinheit, die Ventileinheit oder die Steuereinrichtung bestimmt ist, ebenfalls mit dieser individuellen Kennzeichnung gekennzeichnet oder "kodiert" werden. Andererseits kann dann nach Empfangen des entsprechend kodierten Steuersignals durch die Luftfederbalgeinheit, die Ventileinheit oder die Steuereinrichtung die Steuereinheit das Steuersignal mit der eigenen Kennzeichnung aus einem unter Umständen mehrere Steuersignale enthaltenden Signal extrahieren. Um lediglich einige weitere Beispiele für die Parametrierung zu nennen, kann diese den Fahrzeughersteller, den Fahrzeugtyp, in welchem die Luftfederbalgeinheit, die Steuereinrichtung oder die Ventileinheit Einsatz findet, die Fahrgestellnummer u. ä. beinhalten. Möglich ist auch, dass über die Parametrierung eine Funktionsart spezifiziert wird. Beispielsweise kann dieselbe Luftfederbalgeinheit mittels der Parametrierung auf die Funktionsart als Tragbalgeinheit oder als Liftbalgeinheit spezifiziert werden. Schließlich ist auch möglich, dass über die Parametrierung der Luftfederbalgeinheit, der Steuereinrichtung oder der Ventileinheit zugeordnete charakteristische Kenndaten des Luftfederbalgs (wie bspw. ein Balgdurchmesser, ein Balgvolumen und ein Niveau-Arbeitsbereich) zugewiesen werden.

In weiterer Ausgestaltung der Erfindung erfolgt durch die Parametrierung eine Auswahl einer Art und/oder Funktion der Luftfederung erfolgen (bspw. Vorderachse luftgefedert, Hinterachse luftgefedert, Vorlaufachse luftgefedert, Nachlaufachse luftgefedert), u. U. jeweils mit Angabe der Anzahl der zugeordneten Kanäle und Angabe, Spezifizierung, ob eine Querdrosselung zwischen den Fahrzeugseiten erfolgt oder nicht und/oder Spezifizierung, ob eine Liftachsfunktion Einsatz findet oder nicht. Des Weiteren kann eine Auswahl von Zusatzfunktionen über die Parametrierung erfolgen, bspw. die Aktivierung oder Deaktivierung einer Dämpferregelung und/oder die Vorgabe der Regelungsparameter für die Dämpferregelung. Ebenfalls möglich ist, dass als Zusatzfunktion die Aktivierung oder Deaktivierung eines Tyre Pressure Monitorings Systems (TPMS) möglich ist. Des Weiteren können externe Weg- und/oder Drucksensormodule über die Parametrierung aktiviert oder deaktiviert werden. Darüber hinaus kann auch eine Parametrierung der Steuereinrichtung mit dem Sender für das Steuersignal erfolgen. Hierbei kann die Parametrierung der Steuereinrichtung bspw. durch Daten wie eine Zuweisung des oder der Kennzeichnungen der in der Druckluftanlage verbauten Komponenten wie bspw. der Luftfederbalgeinheiten und/oder der verbauten Sensormodule erfolgen. Durchaus möglich ist auch, dass bei der Steuereinrichtung mit der Parametrierung auch ein Fahrzeughersteller, ein Fahrzeugtyp oder eine Fahrgestellnummer hinterlegt wird.

Gemäß einem weiteren Vorschlag der Erfindung erfolgt die Parametrierung in Zusammenhang mit einer Endprüfung nach Herstellung des Anhängers oder Zugfahrzeugs bei dem Fahrzeughersteller mit Fahrzeug spezifischen Daten. Beispielsweise kann hier eine Parametrierung mit Funktionswerten wie der Höhe des Fahrzeugaufbaus im Bereich der einzelnen Luftfederbälge in einer unteren Position, einer mittleren Position und einer oberen Position erfolgen. Entsprechend können auch Druckwerte und/oder Achsgewichte bei leerem Fahrzeug, bei teilbeladenem Fahrzeug mit angehobener Liftachse, bei teilbeladenem Fahrzeug mit abgesenkter Liftachse und bei vollbeladenem Fahrzeug vorgegeben werden. Ebenfalls möglich ist eine Parametrierung mit Grenzwerten für Warnungen, Abschaltungen u. ä. sowie die Parametrierung mit möglichen Warnmeldungen. Ergänzend kann die Parametrierung der Zusatzfunktionen erfolgen wie bspw. eine Dämpferregelung oder die Aktivierung und Einstellung der Parameter für ein TPMS.

Insbesondere um ein Schutzfunktion gegen eine nicht autorisierte Parametrierung zu gewährleisten, kann die Steuereinheit mit Steuerlogik ausgestattet sein, mittels welcher vor der Parametrierung eine Autorisierung der Parametrierung geprüft wird. Um lediglich ein einfaches nicht beschränkendes Beispiel zu nennen, kann in diesem Zusammenhang die Eingabe und Prüfung einer autorisierenden PIN erfolgen.

Die Betriebssicherheit kann erhöht werden, wenn die Steuereinheit mit Steuerlogik ausgestattet ist, mittels welcher eine Fehlfunktion erkannt wird. Diese Fehlfunktion kann bspw. erkannt werden
- durch Erkennung einer Unterbrechung des Empfangs eines drahtlos übertragenen Signals,
- auf Grundlage von Messsignalen (wie bspw. von einem Solldruck abweichenden Istdrücken oder einem von einem Sollniveau abweichenden Istniveau eines Luftfederbalgs) und/oder
- Erkennung einer nicht mit einem Sollzustand übereinstimmenden Betriebsstellung eines Ventils
u. ä. Wenn eine derartige Fehlfunktion erkannt wird, wird automatisch eine Failsafe-Modus der Luftfederbälge herbeigeführt. Möglich ist, dass in diesem Fall gezielt mittels eines drahtlos übertragenen Steuersignals ein besonderer Betriebszustand der Ventileinrichtung und damit des Luftfederbalgs herbeigeführt wird. Ebenfalls möglich ist, dass eine Bestromung eines für die Be- und Entlüftung der Luftfederbälge verantwortlichen Magnetventils bei erkannter Fehlfunktion entfällt, womit automatisch eine Failsafe-Position dieses Magnetventils eingenommen wird. Hierbei ist möglich, dass lediglich die Failsafe-Modus in einem Teilbereich der Druckluftanlage herbeigeführt wird, in welchem auch die Fehlfunktion erkannt worden ist. Alternativ kann die gesamte Druckluftanlage auf einen Failsafe-Modus umgeschaltet werden. Ergänzend kann der Fahrer über einen erkannten Fehler informiert werden oder es können automatisch Fahrerdatenkommunikationsverbindungen aufgebaut werden, mittels welchen der Fahrer, die Spedition, eine Werkstatt u. ä. über das Auftreten des Fehlers informiert werden.

Um lediglich ein nicht beschränkendes Beispiel zu nennen, kann in dem Failsafe-Modus ein vorbestimmter Betriebszustand der Luftfederbälge, bspw. ein vorgegebenes Niveau des Luftfederbalgs, herbeigeführt werden. Alternativ kann mit der erkannten Fehlfunktion in dem Failsafe-Modus mindestens ein Luftfederbalg abgesperrt werden, womit der zu dem Zeitpunkt des Erkennens des Fehlers eingenommene Betriebszustand des Luftfederbalgs konserviert wird.

Erfindungsgemäß ist die Steuereinrichtung mit der Steuereinheit integraler Bestandteil einer Druckluftaufbereitungseinheit, einer Reifenüberwachungseinheit für eine Überwachung des Drucks und/oder der Temperatur in mindestens einem Reifen, einer elektronischen Bremssteuereinheit oder einer Telematikeinheit, wobei für die unterschiedlichen Funktionen separate Steuereinheiten vorhanden sein können oder die Steuereinheit der Steuereinrichtung multifunktional auch für die Steuerung der Druckluftaufbereitung, der Reifenüberwachungseinheit, der Bremse oder einer Telematikfunktionen zuständig sein kann.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 bis 10**: zeigen stark schematisiert unterschiedliche Nutzfahrzeug-Druckluftanlagen, wobei die Anlagen nach Figuren 4, 5, 8 und 9 erfindungsgemäß sind.
- **Fig. 11**: zeigt eine Luftfederbalgeinheit in weiterer konstruktiver Ausgestaltung bei schematisierter Darstellung.
- **Fig. 12 bis 15**: zeigen schematisiert Verfahren zur Parametrierung.
- **Fig. 16 und 17**: zeigen Verfahren zur Herbeiführung eines Failsafe-Modus.

### FIGURENBESCHREIBUNG

In den Figuren sind teilweise entsprechende oder konstruktiv gleiche Bauelemente mit gleichen Bezugszeichen gekennzeichnet, wobei teilweise auch mehrere entsprechende oder gleiche Bauelemente mit dem Zusatz a, b, c, ... unterschieden sind.

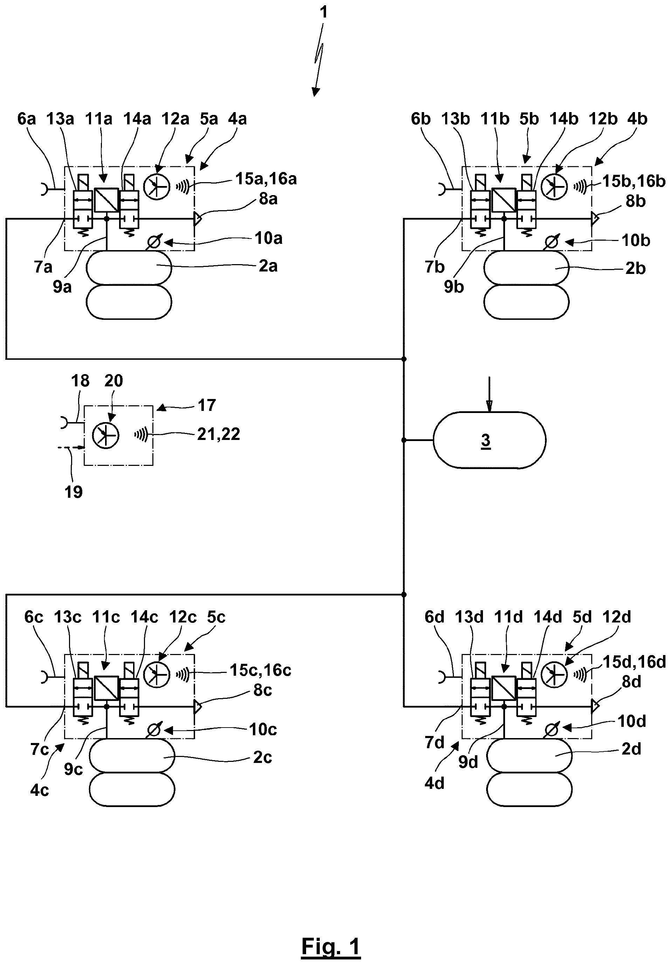

**Fig. 1** zeigt eine Nutzfahrzeug-Druckluftanlage 1 mit hier bspw. vier Luftfederbälgen 2a bis 2d, die unterschiedlichen Fahrzeugseiten und Achsen zugeordnet sind. Durch selektive Verbindung der Luftfederbälge 2a bis 2d entweder mit einer Druckluftquelle, hier einem Vorratsbehälter 3, oder einer jeweils den Luftfederbälgen 2a bis 2d zugeordneten Entlüftung 4a-4d können die Luftfederbälge 2a bis 2d selektiv oder gemeinsam be- und/oder entlüftet werden, was zur Veränderung eines Niveaus eines Luftfederbalgs 2a bis 2d erfolgen kann oder auch zum Konstanthalten des Niveaus bei einer Veränderung der Beladung und/oder bei dynamischen auf den Luftfederbalg 2a bis 2d wirkenden Kräften. Möglich ist auch ein Absperren der Luftfederbälge 2a bis 2d, um das Volumen der in dem Luftfederbalg 2a bis 2d eingeschlossenen Druckluft konstant zu halten.

Gemäß Fig. 1 sind die Luftfederbälge 2a bis 2d jeweils Bestandteil einer Luftfederbalgeinheit 4a bis 4d, welche sich einerseits an einem Chassis oder Fahrzeugträger sowie andererseits an einem Fahrzeugrad oder einem Fahrzeugachskörper abstützt. Die Luftfederbalgeinheit 4 bildet hierbei eine Baueinheit, welche lediglich über Anschlüsse für andere pneumatische Bauelemente der Nutzfahrzeug-Druckluftanlage 1 verfügt, nicht aber über einzelne Bestandteile der Luftfederbalgeinheit 4 verbindende und nach außen frei zugängliche Leitungen. Die Luftfederbalgeinheit 4 kann mit einem mehrteiligen Gehäuse oder modular mit den einzelnen Komponenten ausgebildet sein, welche bspw. aneinander oder an ein geeignetes Tragelement angeflanscht oder anderweitig hiermit verbunden sein können.

Die Luftfederbalgeinheiten 4a bis 4d besitzen eine hier strichpunktiert schematisch dargestellte Ventileinrichtung 5a bis 5d, welche als Modul ausgebildet sein kann. Für dieses Ausführungsbeispiel kommuniziert die Ventileinrichtung 5 ausschließlich mit einer elektrischen Leistungsversorgung 6a bis 6d, einem Versorgungsanschluss 7a bis 7d, welcher hier unmittelbar mit dem Vorratsbehälter 3 verbunden ist, und einer Entlüftung 8a bis 8d mit der Umgebung und weiteren Bauelementen. Über einen inneren Luftfederbalgkanal oder -anschluss 9 ist die Ventileinrichtung 5 mit dem zugeordneten Luftfederbalg 2 verbunden. In die Luftfederbalgeinheit 4 ist des Weiteren ein Niveausensor 10 integriert, welcher bspw. an der Ventileinrichtung 5 gehalten ist und den Weg oder Abstand der beiden Federfußpunkte des Luftfederbalgs 2 erfasst. Darüber hinaus ist in die Ventileinrichtung 5 ein Drucksensor 11 integriert, dem bspw. der Druck des Luftfederbalgkanals oder -Anschlusses 9 zugeführt ist. Des Weiteren weist die Luftfederbalgeinheit 4 eine elektronische Steuereinheit 12 auf. Mittels der elektronischen Steuereinheit 12 erfolgt einerseits die Ansteuerung der elektrischen Steueranschlüsse von Ventilen 13, 14, die hier als direkt gesteuerte Magnetventile ausgebildet sind. Andererseits wird der elektronischen Steuereinheit 12 ein Steuersignal zugeleitet, welches von einem in die Ventileinrichtung 5 integrierten Empfänger 15 empfangen wird und auf Grundlage dessen die Steuereinheit 12 die Ansteuerung der Ventile 13, 14 vornimmt. Andererseits kann die Steuereinheit 12 über einen ebenfalls in die Luftfederbalgeinheit 4 integrierten Sender 16 mit benachbarten Bauelemente, Steuergeräten u. ä. kommunizieren. Vorzugsweise erfolgt durch die Steuereinheit 12 über den Sender 16 die Übertragung von Betriebszuständen der Luftfederbalgeinheit 4, bspw. des von dem Drucksensor 11 gemessenen Drucks und/oder des von dem Niveausensor 10 gemessenen Niveaus.

Die Erzeugung der Steuersignale für die Luftfederbalgeinheiten 4a bis 4d erfolgt durch eine zentrale Steuereinrichtung 17, welche auch als "Master-Steuereinrichtung" bezeichnet werden kann. Diese verfügt über einen Anschluss für eine elektrische Leistungsversorgung 18 und steht in Kommunikation mit weiteren Steuereinrichtungen, was bspw. über einen CAN-Bus 19 erfolgen kann. Die Steuereinrichtung 17 beinhaltet eine elektronische Steuereinheit 20. Diese ermittelt bedarfsgerecht die Steuersignale, welche von einem Sender 21 der Steuereinrichtung 17 ausgesendet werden und von den Empfängern 15a bis 15d der Luftfederbalgeinheiten 4a bis 4d empfangen werden. Möglich ist, dass die Steuereinrichtung 17 auch über einen Empfänger 22 verfügt, über welchen bspw. der Steuereinheit 20 Betriebszustände der Luftfederbalgeinheiten 4a bis 4d, welche von deren Sender 16a bis 16d gesendet werden, zugeführt werden können. Die von der Steuereinheit 20 ermittelten Steuersignale für die Luftfederbalgeinheiten 4a bis 4d sind insbesondere Niveau-Steuersignale, mittels welchen automatisch eine Niveauregelung erfolgt, bspw. um ein Niveau während der Fahrt und/oder eines Be- und Entladens konstant zu halten. Des Weiteren können auch Hebe-Senk-Steuersignale von der Steuereinheit 20 über den Sender 21 erzeugt und von den Empfängern 15a bis 15d empfangen werden, wobei diese Hebe-Senk-Steuersignale auf Grundlage einer manuellen Betätigung eines entsprechenden Betätigungselements der Steuereinrichtung 17 oder einer anderen mit der Steuereinrichtung 17 kommunizierenden Steuereinrichtung erzeugt werden.

Die Luftfederbalgeinheiten 4 sind jeweils unmittelbar benachbart des Fahrzeugrads, eines Dämpfers und/oder einer Achse angeordnet, so dass diese entsprechend der Lage der Fahrzeugräder und Achsen über das Nutzfahrzeug verteilt sind. Die Steuereinrichtung 17 kann an beliebiger, vorzugsweise zentraler Stelle angeordnet sein. So kann bspw. die Steuereinrichtung 17 so angeordnet sein, dass deren Abstand zu sämtlichen Luftfederbalgeinheiten 4a bis 4d möglichst klein ist. Des Weiteren möglich ist, dass die Steuereinrichtung 17 in einem Kopplungsbereich zwischen Zugfahrzeug und Anhänger, in oder unterhalb einer Fahrerkabine, im vorderen oder hinteren Endbereich eines Zugfahrzeugs oder Anhängers oder im Seitenbereich des Zugfahrzeugs oder Anhängers, wo diese besonders gut zugänglich ist, angeordnet ist.

Die Ventile 13, 14 ermöglichen eine Belüftung des zugeordneten Luftfederbalgs 2 durch Verbindung mit dem Vorratsbehälter 3 und eine Entlüftung durch Verbindung mit der Entlüftung 8 sowie eine Absperrung des Luftfederbalgs 2. Für das dargestellte Ausführungsbeispiel ist das Ventil 13 als direkt gesteuertes 2/2-Magnetventil ausgebildet, welches zwischen der Verbindungsleitung des Luftfederbalgs 2 und des Vorratsbehälters 3 angeordnet ist. Das Ventil 14 ist hier ebenfalls als direkt gesteuertes 2/2-Magnetventil ausgebildet, welches zwischen der Entlüftung 8 und dem Luftfederbalg 2 angeordnet ist. Alternativ ist aber durchaus möglich, dass als Ventile 13, 14 elektropneumatisch vorgesteuerte Ventile Einsatz finden, womit trotz verhältnismäßig großen Ventilquerschnitten zur Gewährleistung großer belüftender oder entlüftender Volumenströme kleine vorsteuernde Magnetventile mit geringer Leistungsaufnahme genutzt werden können. Für das Ausführungsbeispiel gemäß Fig. 1 ist die Steuereinrichtung 17 ausschließlich für die Steuerung der Luftfederbalgeinheiten 4 zuständig. Möglich ist, dass über die Sender 16 der Luftfederbalgeinheiten 4 an die Steuereinrichtung 17 der Status der Ventile 13, 14 übertragen wird, womit auch über die Steuereinrichtung 17 der ordnungsgemäße Betrieb der Luftfederbalgeinheiten 4 überwacht werden kann.

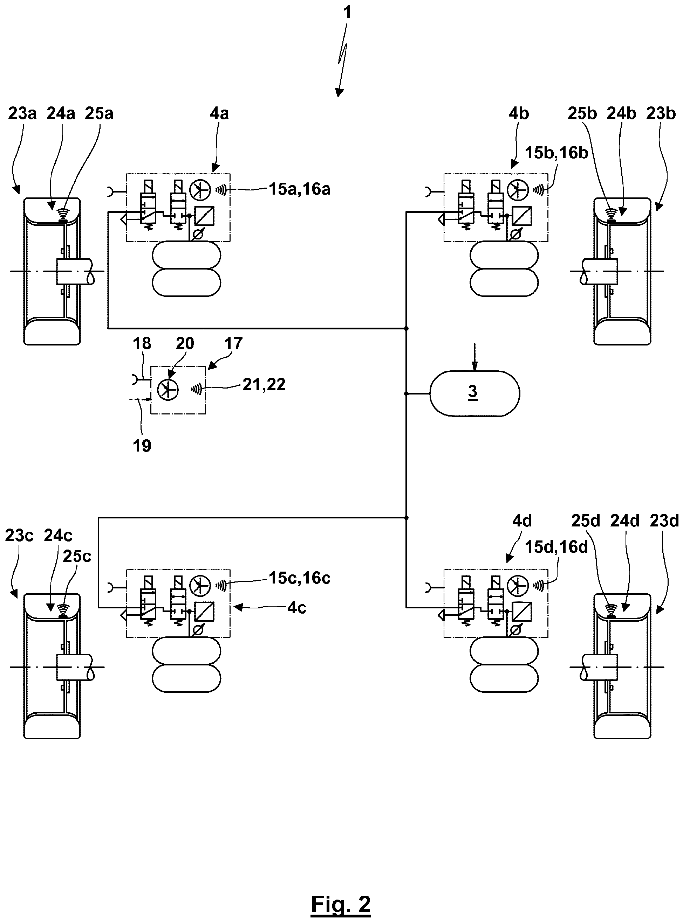

Die Nutzfahrzeug-Druckluftanlage 1 gemäß **Fig. 2** entspricht grundsätzlich der Nutzfahrzeug-Druckluftanlage 1 gemäß Fig. 1. Zusätzlich sind hier die den Luftfederbalgeinheiten 4a bis 4d zugeordneten Fahrzeugräder 23a bis 23d dargestellt. Diese sind mit Reifenüberwachungseinheiten 24a bis 24d ausgestattet, welche vorzugsweise an der Felge gehalten sind und den Innendruck und Temperatur des Reifens erfassen. Die Reifenüberwachungseinheiten 24 weisen einen Sender 25 auf, welcher bspw. ein Reifendrucksignal sendet. Das Signal der Sender 25 wird alternativ oder kumulativ empfangen von den Empfängern 16 der Luftfederbalgeinheiten 4 und/oder dem Empfänger 22 der Steuereinrichtung 17. Das Signal kann dann unmittelbar von der Steuereinheit 12 oder 20 der Luftfederbalgeinheit 4 oder Steuereinrichtung 17 verarbeitet werden. Durchaus möglich ist aber auch, dass mittels des Senders 15 der Luftfederbalgeinheit 4 oder des Senders 21 der Steuereinrichtung 17 das von dem Sender 25 empfangene Signal weiter übertragen wird, ggf. unter einer Verstärkung, an ein weiteres Steuergerät. Auch möglich ist, dass eine Übertragung des Signals nach Empfang durch den Empfänger 22 von der Steuereinheit 20 über den CAN-Bus 19 an andere Steuergeräte übertragen wird. Von Vorteil ist hier bei Empfang des Signals durch den Empfänger 15 der Luftfederbalgeinheit 4, dass die Luftfederbalgeinheit 4 in einem kleinen Abstand, insbesondere von weniger als einem Meter oder sogar weniger als 50 cm, von dem Fahrzeugrad 23 mit der Reifenüberwachungseinheit 24 und dem Sender 25 beabstandet ist, so dass es ausreichend ist, wenn der Sender 25 der Reifenüberwachungseinheit 24 mit einer kleinen Sendeleistung ausgestattet ist. Die Reifenüberwachungseinheit 24 kann alternativ oder kumulativ auch eine Temperatur in dem Reifen über einen geeigneten Sensor erfassen und das daraus resultierende Temperatursignal über den Sensor 25 übertragen mit weiterer Verarbeitung des Temperatursignals, wie dies zuvor hinsichtlich des Reifendrucksignals beschrieben worden ist.

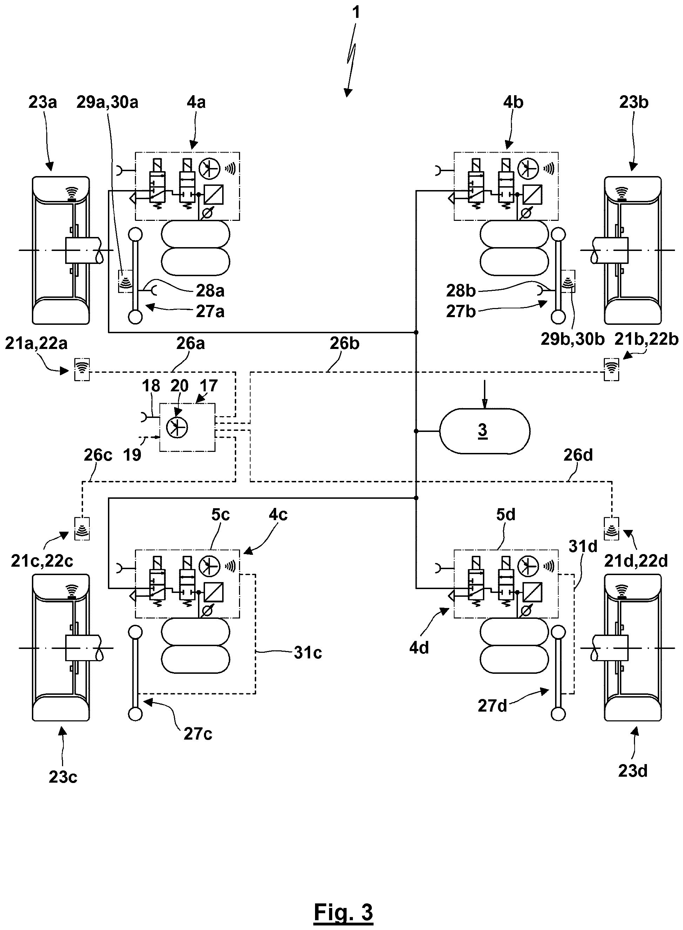

Bei grundsätzlich der Ausführungsform gemäß Fig. 2 entsprechender Ausgestaltung verfügt in der Nutzfahrzeug-Druckluftanlage 1 gemäß **Fig. 3** die Steuereinrichtung 17 nicht über einen integrierten Sender 21 und Empfänger 22. Vielmehr sind hier Sender 21a bis 21d und/oder Empfänger 22a bis 22d über elektrische Leitungen 26a bis 26d an das zentrale Modul der Steuereinrichtung 17 angebunden, wobei die Sender 21 und Empfänger 22 in diesem Fall unmittelbar benachbart den Fahrzeugrädern 23 und der Luftfederbalgeinheit 4 angeordnet sind, so dass eine Übertragung von und zu den Sendern 21 und Empfängern 22 mit einer verringerten Sendeleistung erfolgen kann. Unter Umständen kann durch die extern von der Steuereinrichtung 17 angeordneten Sender 21 und Empfänger 22 der Einbaubereich für die Steuereinrichtung 17 noch flexibler gestaltet werden.

In Fig. 3 sind zusätzlich den Fahrzeugrädern oder zugeordneten Achskörpern zugeordnete elektronisch gesteuerte Dämpfer 27 dargestellt. Hierbei verfügen die Dämpfer 27a, 27b über einen Anschluss für eine elektrische Leistungsversorgung 28a, 28b sowie einen Sender 29a, 29b und/oder Empfänger 30a, 30b, über welche der Dämpfer 27 jeweils mit der zugeordneten Luftfederbalgeinheit 4, hier der Ventileinrichtung 5 mit deren Steuereinheit 12, kommuniziert. Hingegen sind die Dämpfer 27c, 27d über Leitungen 31c, 31d mit den zugeordneten Luftfederbalgeinheiten 4, hier den Ventileinrichtungen 5 mit den Steuereinheiten 12, verbunden. Die Kommunikation zwischen der Luftfederbalgeinheit 4 und dem Dämpfer 27 kann einerseits dazu dienen, dass gleichzeitig mit der Ansteuerung der Ventile 13, 14 der Luftfederbalgeinheit 4 über den Sender 16 der Luftfederbalgeinheit 4 ein Steuersignal an den Dämpfer 27 übermittelt wird, was über den Empfänger 30a, 30b oder die Leitung 31c, 31d erfolgen kann. So kann bspw. im Zusammenhang mit einem Steuersignal, welches ein Nicken oder Neigen des Fahrzeugs durch entsprechende Druckbeaufschlagung der Luftfederbälge 2 entgegenwirken soll, eine entsprechende Verstellung des Dämpfers 27 erfolgen um ergänzend einem Nicken oder Neigen des Fahrzeugs entgegenzuwirken. Andererseits ist möglich, dass ein Betriebszustand des Dämpfers 27 über den Sender 29a, 29b oder die Leitung 31c, 31d an die Ventileinrichtung 5 der Luftfederbalgeinheit 4 übertragen wird. Die dezentral angeordneten Sender 21a bis 21d und/oder Empfänger 22a bis 22d können alternativ oder kumulativ mit den Sendern 29a, 29b oder Empfängern 30a, 30b der Dämpfer 27a, 27b, den Sendern 15 oder Empfängern 16 der Luftfederbalgeinheiten 4 und/oder den Sendern 25 der Reifenüberwachungseinheit 24 kommunizieren.

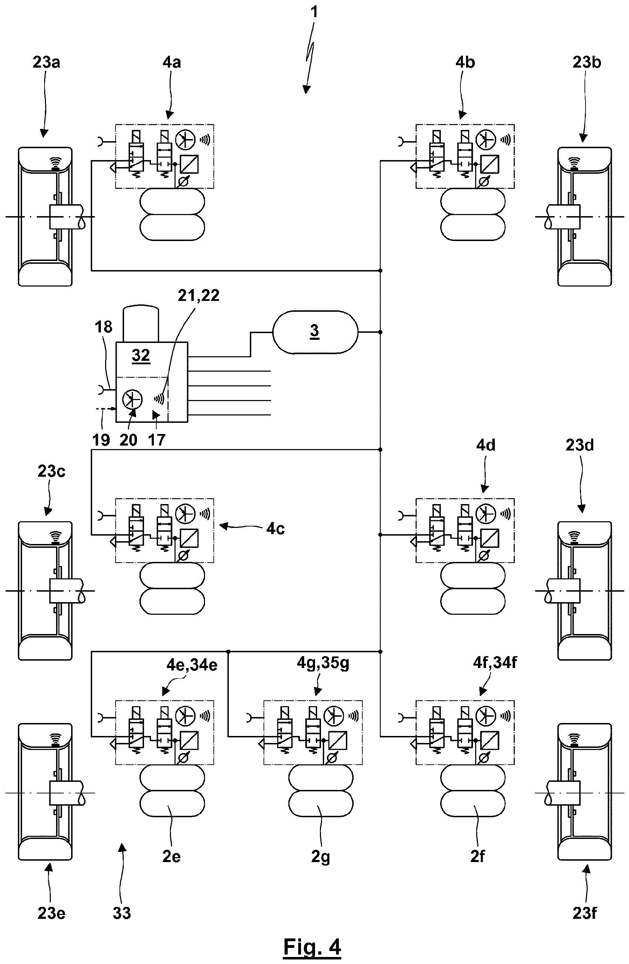

Für die Ausführungsbeispiele gemäß Fig. 2 und 3 ist die Steuereinrichtung 17 mit einer singulären Baueinheit gebildet, welche lediglich den Anschluss 18 für die elektrische Leistungsversorgung und den Anschluss für den CAN-Bus 19 aufgewiesen hat mit weiterer Kommunikation über den Sender 21 und Empfänger 22. Für das Ausführungsbeispiel gemäß **Fig. 4** ist die Steuereinrichtung 17 von einer multifunktionalen Steuereinrichtung einer vorzugsweise elektronischen Luftaufbereitungseinrichtung 32 ausgebildet. Die Luftaufbereitungseinrichtung 32 ist in grundsätzlich bekannter Weise aufgebaut mit bspw. einem Druckregler, einem Regenerationsventil, einem Lufttrockner, einer Zentralleitung mit integriertem Rückschlagventil, in Zweigleitungen zu den Verbraucherkreisen integrierten Kreisschutzventilen u. ä. Über die Luftaufbereitungseinrichtung 32 wird über einen Ausgang derselben der Vorratsbehälter 3 mit Druckluft versorgt. In diesem Fall erfolgt die Kommunikation der Sender 15 und Empfänger 16, und/oder der Sender 25 mit einem in die Luftaufbereitungseinrichtung 32 integrierten Sender 21 und/oder Empfänger 22.

Für das Ausführungsbeispiel gemäß Fig. 4 verfügt die Nutzfahrzeug-Druckluftanlage 1 zusätzlich über eine Liftachse 33 mit Fahrzeugrädern 23e, 23f. Die den Fahrzeugrädern 23e, 23f zugeordneten Luftfederbalgeinheiten 4e, 4f bilden hierbei Tragbalgeinheiten 34e, 34f, wobei die Luftfederbälge 2e, 2f der Tragbalgeinheiten 34e, 34f bei abgesenkter Liftachse 33 mit einem geeigneten Druck zur Herbeiführung der gewünschten Achslastverteilung mit Übernahme einer Teillast durch die Liftachse 33 beaufschlagt werden. Hingegen bildet eine Luftfederbalgeinheit 4g eine Liftbalgeinheit 35g, mit deren Belüftung oder Entlüftung die Liftachse 33 aktivierbar oder deaktivierbar ist. Möglich ist hierbei, dass sämtliche Luftfederbalgeinheiten 4a bis 4g konstruktiv identisch ausgebildet sind, womit ein hoher Gleichanteil vorhanden sein kann. Eine Anpassung an die jeweils unterschiedlichen Funktionen, Achsen, Fahrzeugseiten u. ä. ausschließlich durch die empfangenen Steuersignale und/oder die Programmierung der Steuereinheiten sowie eine geeignete Parametrierung der Komponenten Nutzfahrzeug-Druckluftanlage (wie im Folgenden noch näher beschrieben wird) erfolgen kann.

In der Luftaufbereitungseinrichtung 32 ist die Steuereinheit 20 der Steuereinrichtung 17 zusätzlich auch für Ansteuerung bspw. des Regenerationsventils, des Druckreglers und/oder von Mehrkreisschutzventilen zuständig, wobei diese auch beliebige andere zusätzliche Funktionen einschließlich einer Ansteuerung auch externer Komponenten übernehmen kann.

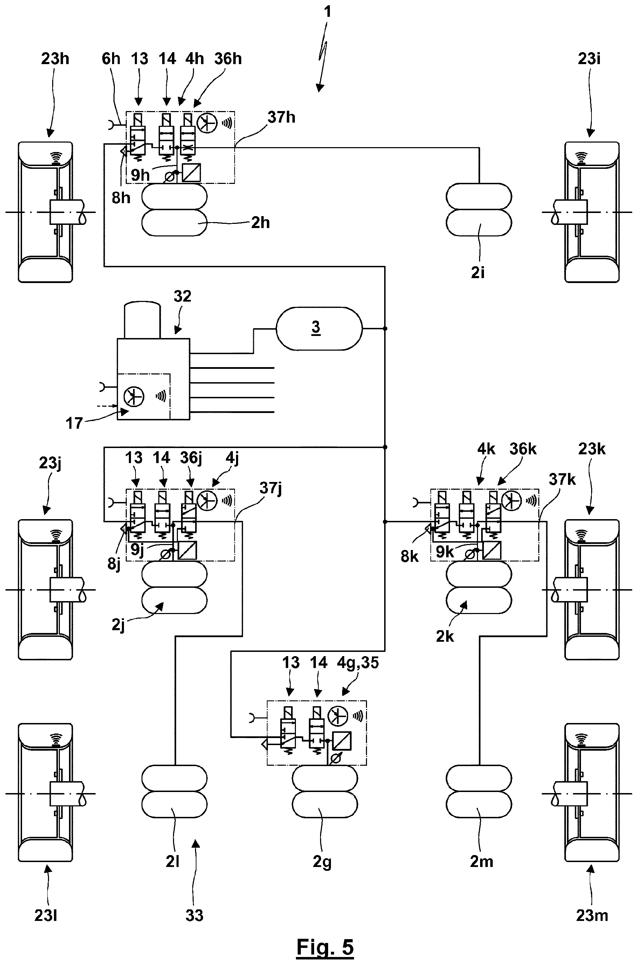

Auch für das Ausführungsbeispiel gemäß **Fig. 5** ist die Steuereinrichtung 17 erfindungsgemäß in eine Luftaufbereitungseinrichtung 32 integriert. In der Luftfederbalgeinheit 4h ist das Ventil 13 als 3/2-Magnetventil ausgebildet, welches in einer Schaltstellung eine Verbindung zu der Entlüftung 8h schafft und in der anderen Schaltstellung eine Verbindung zu dem Vorratsbehälter 3 schafft. Ein somit je nach Schaltstellung des Ventils 13 belüfteteter oder entlüfteter Anschluss des Ventils 13 ist über das Ventil 14, welches hier als 2/2-Magnetventil ausgebildet ist, und den Luftfederbalgkanal 9h mit dem Luftfederbalg 2h verbunden. In der Sperrstellung des Ventils 14 ist somit der Luftfederbalg 2h abgesperrt, während in der Öffnungsstellung des Ventils 14 je nach Be- oder Entlüftungsstellung des Ventils 13 der Luftfederbalg 2h be- oder entlüftet werden kann. Der Luftfederbalgkanal 9h ist über ein weiteres Ventil 36, welches hier als 2/2-Magnetventil mit einer Durchlassstellung und einer gedrosselten Durchlassstellung ausgebildet ist, mit einem Anschluss 37 der Ventileinrichtung 5 verbunden, der mit dem Luftfederbalg 2i direkt verbunden ist, der einer anderen Fahrzeugseite aber derselben Fahrzeugachse zugeordnet ist wie der Luftfederbalg 2h. In der Durchlassstellung des Ventils 36 kann somit je nach Stellung der Ventile 13, 14 eine gemeinsame Be- und Entlüftung oder ein Absperren der beiden Luftfederbälge 2h, 2i erfolgen. Hingegen sind in der Sperrstellung des Ventils 14 und der gedrosselten Durchlassstellung des Ventils 36 die Luftfederbälge 2h, 2i gedrosselt miteinander verbunden, womit ein verzögerter Druckluftausgleich der Luftfederbälge 2h, 2i der beiden Fahrzeugseiten erfolgen kann.

Die Luftfederbalgeinheiten 4j, 4k sind jeweils als integrale Baueinheit mit den Luftfederbälgen 2j, 2k ausgebildet, welche den Fahrzeugrädern 23j, 23k unterschiedlicher Fahrzeugseiten derselben Achse zugeordnet sind. Das Be-und Entlüften sowie Absperren der Luftfederbälge 2j, 2k durch die Luftfederbalgeinheiten 4j, 4k erfolgt wie für die Luftfederbalgeinheit 4h beschrieben mit geeigneter Ansteuerung der Ventile 13, 14. In diesem Fall ist aber der Anschluss 37j, 37k der Ventileinrichtung 5j, 5k mit einem Luftfederbalg 2l, 2m derselben Fahrzeugseite, aber einer anderen Achse, hier der Liftachse 33 verbunden. In diesem Fall ist dem Anschluss 37j, 37k ein Ventil 36j, 36k vorgeordnet, welches als 3/2-Magnetventil ausgebildet ist und in einer Schaltstellung den Anschluss 37j, 37k mit dem Luftfederbalgkanal 9j, 9k, verbindet und in der anderen Schaltstellung mit der Entlüftung 8j, 8k verbindet. In diesem Fall bilden somit die Luftfederbalgeinheiten 4j, 4k auch die Tragbalgeinheiten 34 aus.

Hingegen dient die Luftfederbalgeinheit 4g, welche die Liftbalgeinheit 35 bildet, der pneumatischen Beaufschlagung des Luftfederbalgs 2g zur Aktivierung und Deaktivierung der Liftachse 33. In der Luftfederbalgeinheit 4g ist das Ventil 13 als 3/2-Magnetventil mit einer Belüftungsstellung sowie einer Entlüftungsstellung sowie das Ventil 14 als 2/2-Magnetventil mit einer Durchlassstellung und einer Sperrstellung ausgebildet.

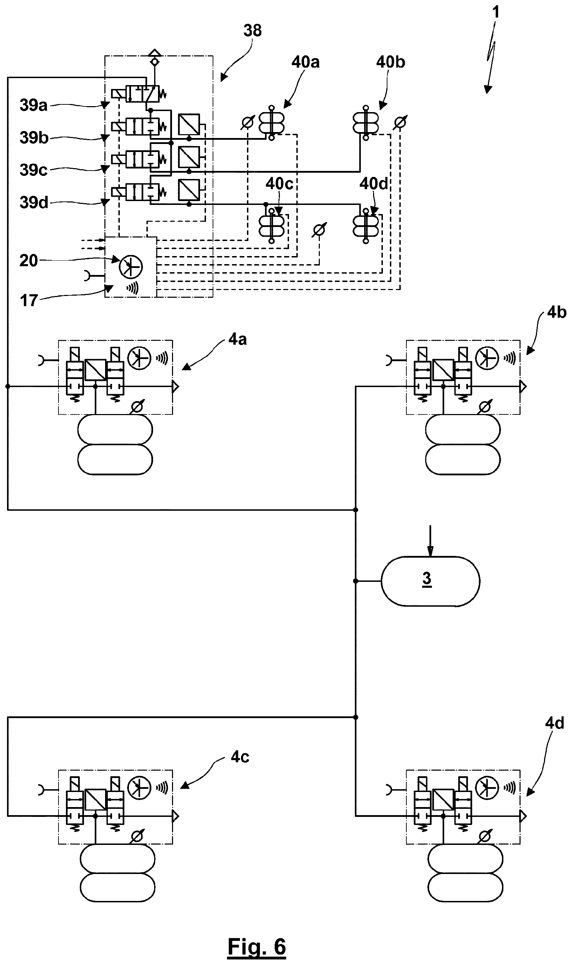

Für das Ausführungsbeispiel gemäß **Fig. 6** sind die Luftfederbalgeinheiten 4a bis 4d und deren Verbindung mit dem Vorratsbehälter 3 entsprechend Fig. 1 ausgebildet. In diesem Fall ist aber die Steuereinrichtung 17 von einer multifunktionalen Steuereinrichtung eines Kabinenluftfedermoduls 38 ausgebildet. Die Steuereinheit 20 ist hier auch zuständig für die Ansteuerung von Magnetventilen 39a bis 39d, welche für die Steuerung oder Regelung der pneumatischen Beaufschlagung von Kabinenluftfederbälgen 40a bis 40d zuständig sind, welche zwischen einem Fahrzeugträger oder Chassis und der Fahrerkabine angeordnet sind. Ergänzend werden der Steuereinrichtung 17 in diesem Fall Niveausignale der Fahrerkabine bzw. der Kabinenluftfederbälge 40 zugeführt und/oder Drucksignale von Drucksensoren, welche hier ebenfalls in dem Kabinenluftfedermodul 38 angeordnet sind und den Druck in den Kabinenluftfederbälgen 40 erfassen. Hinsichtlich weiterer Details zur Ausbildung und Integration eines Kabinenluftfedermoduls 38, welche auf die vorliegende Erfindung übertragbar sind, wird auf die nicht vorveröffentlichte Patentanmeldung DE 10 2014 109 593.6 verwiesen.

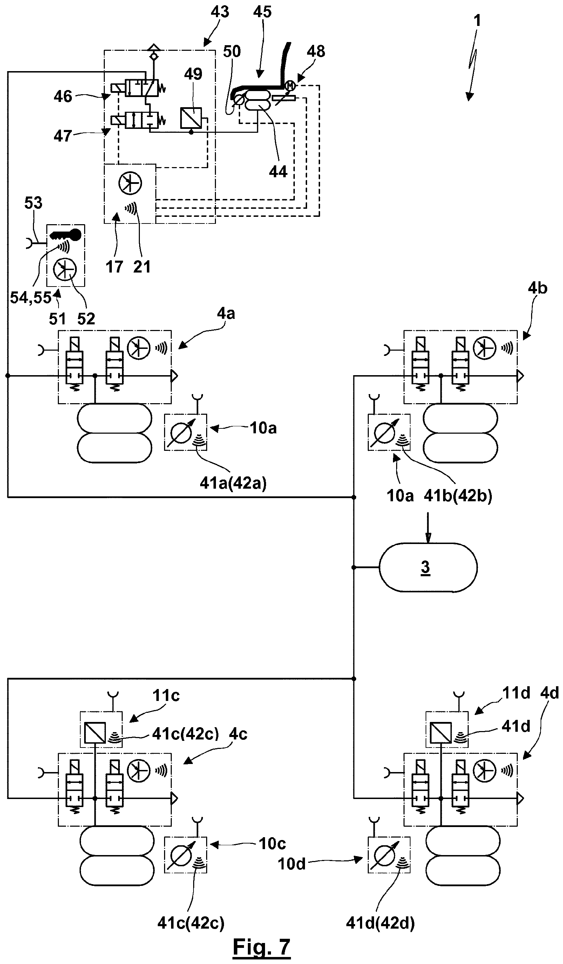

Für das Ausführungsbeispiel der Nutzfahrzeug-Druckluftanlage 1 gemäß **Fig. 7** sind grundsätzlich die Luftfederbalgeinheiten 4a bis 4d entsprechend Fig. 1 ausgebildet und mit dem Vorratsbehälter 3 verbunden. Allerdings sind hier die Niveausensoren 10a bis 10d und Drucksensoren 11a bis 11c nicht in die Ventileinrichtungen 5a bis 5d der Luftfederbalgeinheiten 4a bis 4d integriert, sondern extern hiervon angeordnet, wobei für das dargestellte Ausführungsbeispiel die Drucksensoren11 dennoch durch die Ventileinrichtung 5 hindurch mit dem Luftfederbalgkanal 9 verbunden sind. Hier sind die Niveausensoren 10 und Drucksensoren 11 mit eigenen Sendern 41, ggf. auch mit Empfängern 42, ausgestattet. In diesem Fall kommunizieren die Sender 41 der Niveausensoren 10 und Drucksensoren 11 mit den Empfängern 15 der Luftfederbalgeinheiten 4.

Gemäß Fig. 7 ist die Steuereinrichtung 17 integriert in ein Fahrersitzmodul 43. Über dieses wird zusätzlich durch die Steuereinrichtung 17 die pneumatische Beaufschlagung eines Luftfederbalgs 44 für einen Fahrersitz 45 gesteuert. Zu diesem Zweck verfügt das Fahrsitzmodul 34 über zwei Magnetventile 46, 47, die von der Steuereinrichtung 17 angesteuert werden zur Belüftung, zum Sperren und zum Entlüften des Luftfederbalgs 44 und damit zur Einstellung und zum Halten der Höhe des Fahrersitzes 45. Darüber hinaus kann über die Steuereinrichtung 17 ein Verstell-Aktuator 48 für den Fahrersitz 45 angesteuert werden, mittels dessen die Längsposition, ein Neigungswinkel o. ä. des Fahrersitzes 45 verstellbar ist. Der Steuereinrichtung 17 kann das Signal eines in das Fahrersitzmodul 43 integrierten Drucksensors 49 und eines Sitzpositionssensors 50 zugeführt werden zur Steuerung oder Regelung der Position und Ausrichtung des Fahrersitzes 45. Möglich ist des Weiteren auch, dass auch mittels der Steuereinrichtung 17 die Ansteuerung einer Heizung und/oder Lüftung des Fahrersitzes 45 erfolgt. In Fig. 7 findet eine Zündschlüsseleinheit 51 Einsatz, welche über eine eigene Steuereinheit 52 und einen Anschluss 53 für eine elektrische Leistungsversorgung verfügt. Die Zündschlüsseleinheit 51 besitzt des Weiteren einen Sender 54 (unter Umständen auch einen Empfänger 55), welcher mit dem Empfänger 22 der Steuereinrichtung 17 kommuniziert. Beispielsweise kann bei Einstecken des Zündschlüssels und unter Umständen auch Betätigung des Zündschlüssels in die Zündschlüsseleinheit 51 ein entsprechendes Signal an die Steuereinrichtung 17 übermittelt werden. Für eine sogenannte Abfahrtskontrolle, für welche gewährleistet sein muss, dass die Luftfederungsanlage einen vorbestimmten Zustand erreicht hat, kann auf ein derartiges Signal der Zündschlüsseleinheit 51 die Steuereinrichtung 17 prüfen, ob die Drucksensoren 11 und/oder Niveausensoren 10 der Luftfederbalgeinheiten 4 die vorbestimmten Betriebszustände melden. Sofern dies der Fall ist, kann dem Fahrer indiziert werden, dass das Fahrzeug losfahren kann. Hierbei erfolgt die Kommunikation im Rahmen der Erfindung drahtlos.

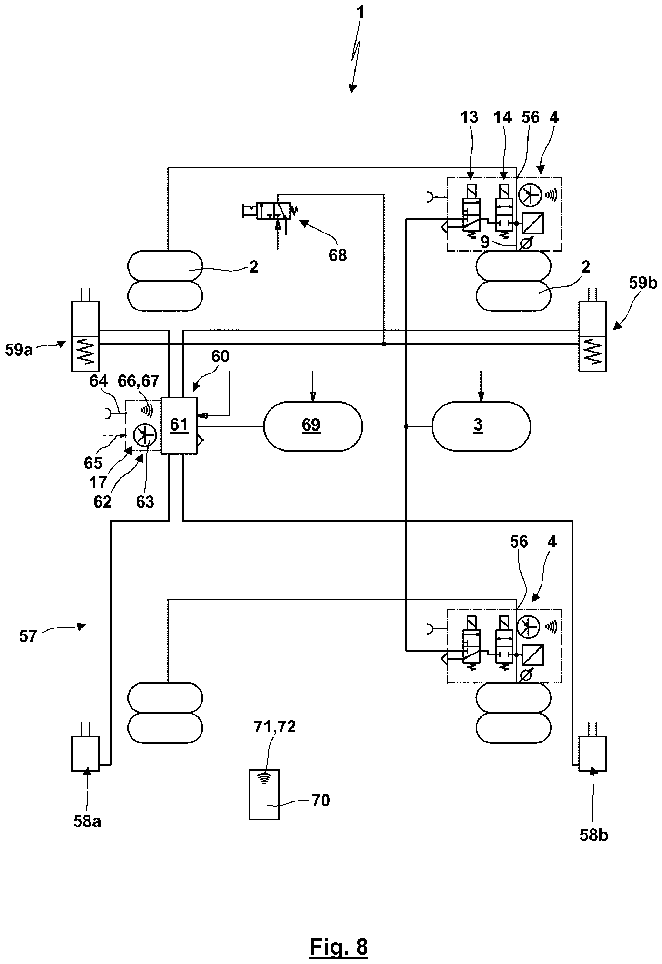

Für das Ausführungsbeispiel gemäß **Fig. 8** finden Luftfederbalgeinheiten 4 Einsatz, bei welchen die Ventile 13, 14 als 3/2-Magnetventil zur Be- und Entlüftung sowie als 2/2-Magnetventil zum Durchlassen und Absperren ausgebildet sind. Hier dienen die Ventileinrichtungen 5 der Luftfederbalgeinheiten 4 nicht ausschließlich zur Belüftung, Entlüftung und zum Absperren des Luftfederbalgs 2, welcher Bestandteil der Luftfederbalgeinheit 4 ist. Vielmehr verfügen die Ventileinrichtungen 5 über einen Anschluss 56, welcher unmittelbar mit einem Luftfederbalg 2 derselben Achse, aber der anderen Fahrzeugseite verbunden ist. Der Anschluss 56 ist hierbei unmittelbar mit dem Luftfederbalgkanal 9 verbunden, so dass die beiden Luftfederbälge 2 derselben Achse mit demselben Druck beaufschlagt werden.

Zusätzlich ist hier eine elektropneumatische Bremsanlage 57 dargestellt, welche mit Betriebszylindern 58 a, b an einer Achse sowie Kombi-Bremszylinder 59 an einer anderen Achse ausgebildet ist. Die Steuerung oder Regelung des Drucks in Betriebsbremskammern der Betriebsbremszylinder 58 und Kombi-Bremszylinder 59 erfolgt über eine Bremssteuereinheit 60, welche auch als EBS-Steuereinheit bezeichnet werden kann. Diese verfügt über eine Ventileinrichtung 61 mit direkt elektrisch gesteuerten Ventilen oder elektrisch vorgesteuerten Ventilen zur Steuerung oder Regelung der Druckbeaufschlagung der Betriebsbremskammern sowie ein Steuermodul 62 mit einer Steuereinheit 63. Das Steuermodul 62 besitzt einen Anschluss 64 für eine elektrische Leistungsversorgung sowie einen Anschluss für einen CAN-Bus 65. In das Steuermodul 62 ist ein Sender 66 und/oder ein Empfänger 67 integriert. Das Steuermodul 62 bildet in diesem Fall die Steuereinrichtung 17 aus, die somit multifunktional ist.

Die Versorgung der Ventileinrichtung 61 der Bremssteuereinheit 60 mit Druckluft erfolgt über einen Behälter 69, welcher (wie der Vorratsbehälter 3) mit Druckluft versorgt wird.

Zu erkennen ist in Fig. 8 auch ein manuell betätigtes Parkventil 68, über welches der Fahrer manuell ein Betätigen und Lösen der Kombi-Bremszylinder über die Federspeicherkammern herbeiführen kann.

Des Weiteren ist in Fig. 8 zu erkennen, dass ein Einwirken auf die Bremssteuereinheit 60 und/oder die Luftfederungsanlage und die Luftfederbalgeinheiten 4 über eine Fernbedienung 70 möglich ist, welche über einen Sender 71 zur drahtlosen Übertragung eines Wunsches ausgestattet ist. Möglich ist hierbei, dass die Fernbedienung 70 mittels eines Smartphones oder Laptops, bspw. über eine Bluetooth-Verbindung, ohne Hardware-Verbindung, also drahtlos, erfolgt. Ebenfalls möglich ist, dass die Fernbedienung 70 auch über einen Empfänger 72 verfügt, womit über die Fernbedienung 70 oder ein Smartphone oder Laptop auch eine Diagnose über den Betriebszustand der Bremssteuereinheit 60 und/oder der Luftfederungsanlage mit den Luftfederbalgeinheiten 4 möglich ist.

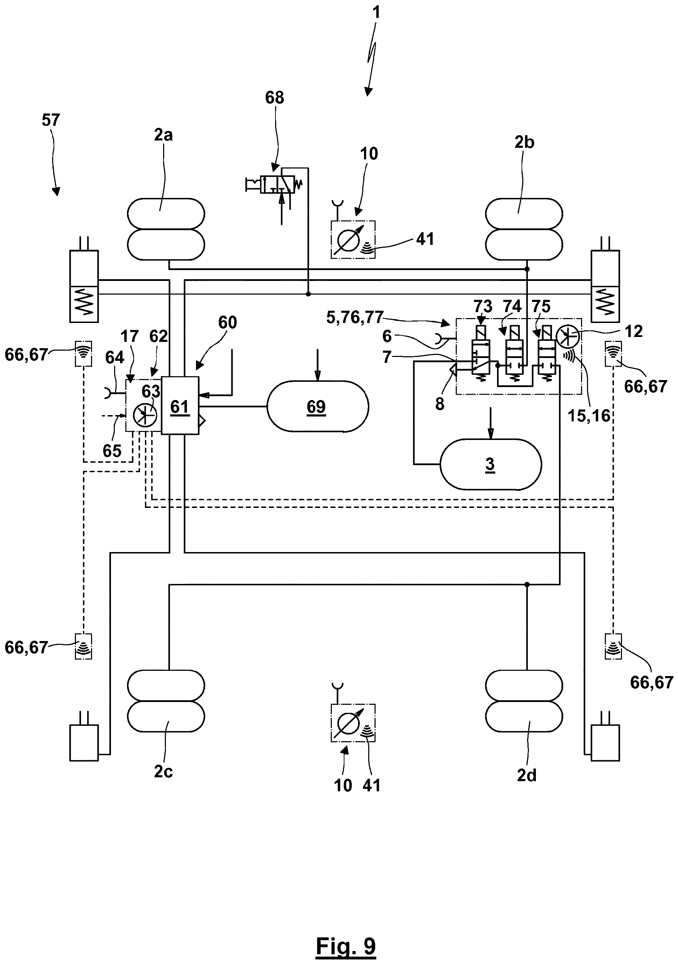

**Fig. 9** zeigt eine abgewandelte Ausführungsform, bei welcher die Ventileinrichtung 5 nicht integraler Bestandteil einer Luftfederbalgeinheit 4 ist. Vielmehr ist hier die Ventileinrichtung 5 separat von den Luftfederbälgen 2 ausgebildet und mit diesen über externe Leitungsverbindungen verbunden. Für das dargestellte Ausführungsbeispiel ist die Ventileinrichtung 5 mit einem be- und entlüftenden 3/2-Magnetventil 73 gebildet, dessen be- und entlüfteter Anschluss über eine Verzweigung mit zwei 2/2-Magnetventilen 74, 75 in Ausbildung als Sperrventile verbunden ist. Hierbei ist das Magnetventil 74 mit den beiden Luftfederbälgen 2a, 2b einer Fahrzeugachse und das Magnetventil 75 mit zwei Luftfederbälgen 2c, 2d einer anderen Fahrzeugachse verbunden. Somit sind in der Sperrstellung des Magnetventils 74 die Luftfederbälge 2a, 2b einer Fahrzeugachse abgesperrt, während in der Durchlassstellung des Magnetventils 74 je nach Schaltstellung des Magnetventils 73 eine gemeinsame Be- und Entlüftung der Luftfederbälge 2a, 2b dieser Fahrzeugachse erfolgen kann. Das Entsprechende gilt für das Zusammenwirken der Magnetventile 73, 75 hinsichtlich des Absperrens, Belüftens und Entlüftens der Luftfederbälge 2c , 2d der anderen Fahrzeugachse. Die mit den Magnetventilen 73, 74, 75 gebildete Ventileinrichtung bildet gemeinsam mit der Steuereinheit 12 und dem Sender 15 und/oder Empfänger 16 eine Ventileinheit 76, welche eine vorzugsweise modulare singuläre Baueinheit bildet und lediglich die Anschlüsse für die Luftfederbälge 2a, 2b, 2c, 2d, die Entlüftung 8, einen Anschluss 7 für den Anschluss des Vorratsbehälters 3 und den Anschluss 6 für eine Kommunikation mit der Umgebung ausbildet sowie die drahtlose Kommunikation über den Sender 15 und/oder Empfänger 16 ermöglicht.

Hier sind, grundsätzlich vergleichbar zu dem Ausführungsbeispiel gemäß Fig. 7, die Niveausensoren 10 als dezentrale, singuläre Baueinheiten ausgebildet, welche über Anschlüsse für eine elektrische Leistungsversorgung verfügen und zumindest einen Sender 41 aufweisen. Des Weiteren sind für das dargestellte Ausführungsbeispiel mehrere Sender 66 und/oder Empfänger 67 der Bremssteuereinheit 60 dezentral von dieser angeordnet und über elektrische Leitungsverbindungen mit dieser verbunden. Die Sender 66 und Empfänger 67 sind vorzugsweise eng benachbart den Fahrzeugrädern 23, den Luftfederbälgen 2 und/oder den Kombi-Bremszylindern 59 und Betriebsbremszylindern 58 angeordnet oder in unmittelbarer Nachbarschaft der Ventileinheit 76. Die Ventileinheit 76 bildet hierbei auch ein Achsmodul 77, welches für das dargestellte Ausführungsbeispiel für die Druckbeaufschlagung der Luftfederbälge von zwei Achsen zuständig ist. Es versteht sich, dass ein derartiges Achsmodul 77 auch lediglich für eine Achse oder mehr als zwei Achsen zuständig sein kann.

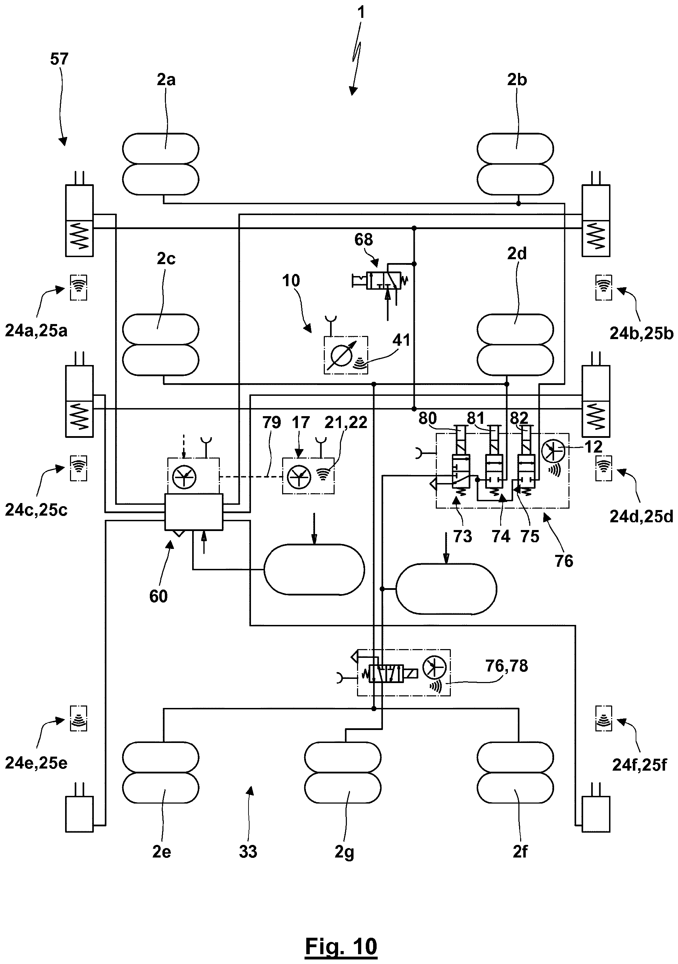

Für das Ausführungsbeispiel gemäß **Fig. 10** findet eine Ventileinheit 76 Einsatz, welche eine Liftachseinheit 78 bildet. Hier besitzt die Liftachseinheit 78 einen Ausgang für die Liftbälge 2e, 2f, welche die Tragbälge der Liftachse 33 bilden, sowie einen Ausgang für einen Liftbalg 2g der Liftachse 33. Die Ventileinheit 76 besitzt auch hier eine Steuereinheit mit Sender und/oder Empfänger und zumindest ein Ventil, über welches in an sich bekannter Weise die pneumatische Druckluftversorgung einerseits zum Aktivieren und Deaktivieren der Liftachse 33 durch Druckbeaufschlagung des Liftbalgs 2g und andererseits die Druckbeaufschlagung zur Aufteilung der Achslast bei aktivierter Liftachse mittels der Tragbälge 2e, 2f erfolgt.

Für das Ausführungsbeispiel gemäß Fig. 10 ist die Steuereinrichtung 17 für die Erzeugung der Steuersignale für die Ventileinheiten 76 und etwaige Luftfederbalgeinheiten 4 nicht integral mit der Bremssteuereinheit 60 ausgebildet. Nicht erfindungsgemäß ist hier vielmehr eine externe, separate Steuereinrichtung 17 vorgesehen, welche über eine elektrische Leitung 79 mit der Bremssteuereinheit 60 verbunden ist. Die Steuereinrichtung 17 kommuniziert über den Sender 21 und/oder den Empfänger 22 einerseits mit den Ventileinheiten 76, insbesondere zur Übertragung eines Steuersignals, und unter Umständen zusätzlich auch mit weiteren Steuergeräten, Reifenüberwachungseinheiten 24 u. ä.

Eine weitere Ventileinheit 76 ist, grundsätzlich entsprechend der Ventileinheit 76 gemäß Fig. 9, für die Druckbeaufschlagung der Luftfederbälge 2a, 2b, 2c, 2d zuständig. Allerdings können hier die Magnetventile 73, 74, 75 nicht nur ausschließlich elektrisch über die Steuereinheit 12 betätigt werden. Vielmehr verfügen diese jeweils über ein Betätigungselement 80, 81, 82, über welche auch eine manuelle Betätigung oder eine Notbetätigung durch den Fahrer möglich ist.

Auch hier finden Niveausensoren 10 Einsatz, welche als singuläre Baueinheiten ausgebildet sind und über einen Sender verfügen.

Des Weiteren ist auch hier ein Parkventil 68 vorhanden.

Möglich ist, dass die Steuereinheiten drahtlos oder drahtgebunden auch mit einem TelematikSystem kommunizieren können. Auch die Drucksensoren können als separate singuläre Baueinheiten ausgebildet sein, welche über einen Sender drahtlos mit den genannten Empfängern, der Ventileinheit 76, der Steuereinrichtung 17 oder einer Luftfederbalgeinheit 4 kommunizieren können.

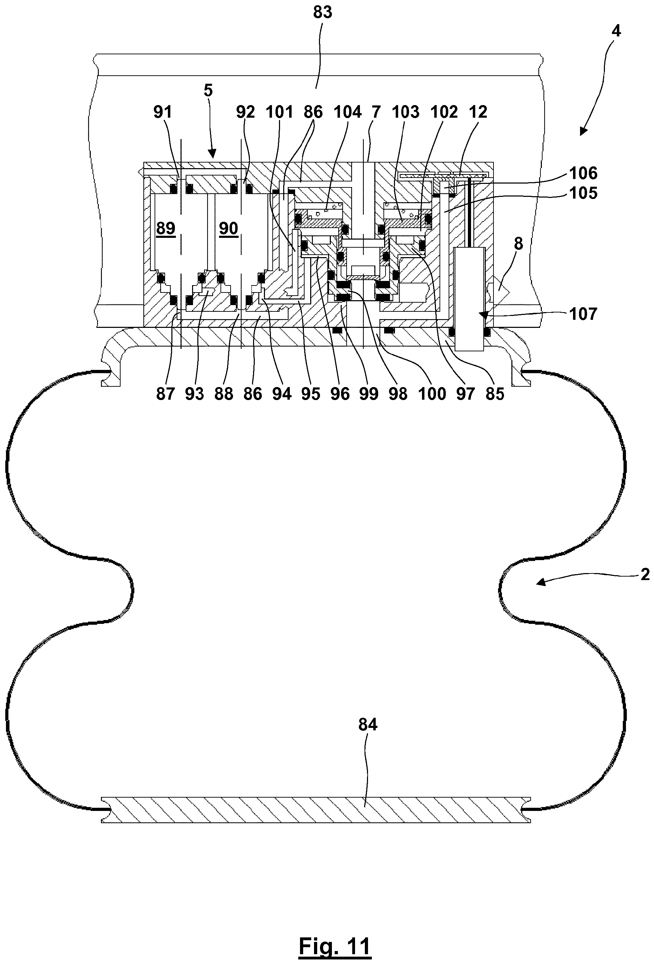

**Fig. 11** zeigt eine konstruktive Ausgestaltung einer Luftfederbalgeinheit 4. Die Luftfederbalgeinheit 4 ist an einem Träger 83 des Nutzfahrzeugs befestigt. Der Luftfederbalg 2 verfügt über einen fest mit dem Träger 83 verbundenen Federfußpunkt 84 sowie einen Federfußpunkt 85, welcher mit dem Achskörper oder dem Fahrzeugrad verbunden ist. Starr mit dem Federfußpunkt 84 und dem Träger 83 verbunden ist die Ventileinrichtung 5. Die Ventileinrichtung 5 verfügt über einen Versorgungsanschluss 7, der über eine innere Leitung mit Einlassanschlüssen 87, 88 von Magnetventilen 89, 90 verbunden ist. Die Magnetventile 89, 90 besitzen jeweils auch einen Entlüftungsanschluss 91, 92. Je nach Stellung der Magnetventile 89, 90 können Anschlüsse 93, 94 der Magnetventile 89, 90 entweder mit der zugeordneten Entlüftung 91, 92 oder dem Einlassanschluss 87, 88 verbunden werden, so dass diese belüftet oder entlüftet werden können.

Der Anschluss 94 ist über eine Steuerleitung 95 mit einer Steuerkammer 96 verbunden. Die Steuerkammer 96 ist begrenzt von dem Gehäuse der Ventileinrichtung 5 und einem verschieblich darin angeordneten Steuerkolben 97. Mit Druckbeaufschlagung der Steuerkammer 96 wird ein endseitig von dem Steuerkolben 97 ausgebildeter Ventilkörper 98 von einem Ventilsitz 99 weg bewegt, womit eine Verbindung zwischen einem Luftfederbalganschluss 100 und einer Entlüftung 8 geschaffen wird. Hingegen führt die Druckbeaufschlagung des Anschlusses 93 zur Druckbeaufschlagung einer Steuerleitung 101, die zu einer Steuerkammer 102 führt, welche von dem Gehäuse der Ventileinrichtung 5, dem Steuerkolben 97 und einem weiteren Steuerkolben 103 begrenzt ist. Infolge der Druckbeaufschlagung des Steuerkolbens 103 über die Steuerleitung 101 bewegt sich der Steuerkolben 103 relativ zu dem Steuerkolben 79 in Fig. 11 nach oben gegen die Beaufschlagung einer am Gehäuse der Ventileinrichtung 5 abgestützten Druckfeder 104. Diese Relativbewegung zwischen den Steuerkolben 103, 97 führt dazu, dass ein zwischen der Stirnseite des Steuerkolbens 97 und der Stirnseite des Steuerkolbens 103 gebildeter Einlass-Ventilsitz geöffnet wird, so dass Druckluft von dem Versorgungsanschluss 7 über den geöffneten Ventilsitz und den Luftfederbalganschluss 100 in den Luftfederbalg 2 einströmen kann.

Über eine Zweigleitung 105 wird der Druck an dem Luftfederbalganschluss 100 einem Drucksensor 106 zugeführt, welcher in das Gehäuse der Ventileinrichtung 5 integriert ist. Des Weiteren erstreckt sich ein Niveausensor 107, welcher den Abstand der Federfußpunkte 84, 85 voneinander erfasst, in und aus dem Gehäuse der Ventileinrichtung 5 sowie durch den Federfußpunkt 85 in das Innere des Luftfederbalgs 2. Vorzugsweise handelt es sich bei dem Niveausensor 107 um einen Sensor, welcher den Abstand auf Grundlage einer Ultraschall-Laufzeitmessung erfasst. Die Ventileinrichtung 5 verfügt über eine Steuereinheit 12, welche hier als in das Gehäuse integrierte Platine lediglich angedeutet ist. Die Platine trägt hierbei auch den Drucksensor 106 und ist elektrisch verbunden mit dem Niveausensor 107. Des Weiteren dient die Steuereinheit 12 der (hier nicht näher dargestellten) Ansteuerung der Magnetventile 89, 90. Schließlich kommuniziert die Steuereinheit 12 mit einem hier ebenfalls nicht dargestellten Sender 15 und/oder Empfänger 16, um Steuersignale zu empfangen und/oder Betriebszustände, insbesondere Messsignale des Drucksensors 106 und/oder des Niveausensors 107, zu übertragen.

Die Luftfederbalgeinheiten 4, die Ventileinheiten 76 und/oder die Steuereinrichtung 7 erhalten im Herstellerwerk eine spezifische Kennzeichnung, bei welcher es sich bspw. um eine spezifische digitale Ziffer oder einen spezifischen Modul-Namen handelt, und welcher zur Herstellung, Dokumentation und Parametrierung beim Fahrzeughersteller und zur Parametrierung oder zur späteren Werksdiagnose herangezogen werden kann.

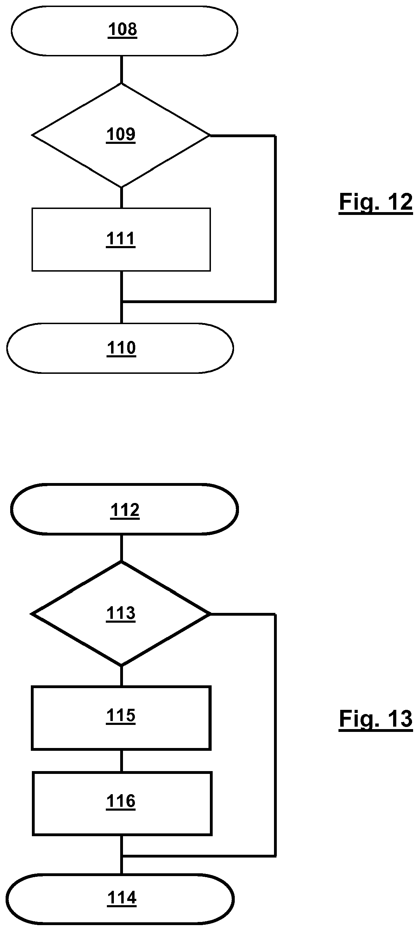

**Fig. 12** zeigt ein Verfahren zur Parametrierung einer Luftfederbalgeinheit 4 oder Ventileinheit 76. Nach einem Start der Parametrierung in einem Verfahrensschritt 108 wird in einem Verfahrensschritt 109 mit einem Programmiertool geprüft, ob eine Parametrierung bereits durchgeführt wurde. Ist dies der Fall, verzweigt das Verfahren zu dem Verfahrensende 110. Anderenfalls wird die Parametrierung in dem Verfahrensschritt 111 durchgeführt. Hierbei erfolgt die Parametrierung der Ventileinheit 76 oder der Luftfederbalgeinheit 4 durch Hinterlegung von Daten wie die Zuweisung einer spezifischen Kennzeichnung der Steuereinrichtung 17, von welcher die Luftfederbalgeinheit 4 oder die Ventileinheit 76 Steuersignale empfangen soll, durch Parametrierung mit Hinterlegung des Fahrzeugherstellers, des Fahrzeugtyps, der Fahrgestellnummer, der Funktionsart oder der Kenndaten mindestens eines Luftfederbalges. Hinsichtlich der Funktionsart kann bspw. für die Parametrierung einer Luftfederbalgeinheit 4 hinterlegt werden, ob diese als Tragbalgeinheit 34 oder als Liftbalgeinheit 35 eingesetzt ist. Hingegen kann bei einer Parametrierung der Kenndaten mindestens eines Luftfederbalges einer Hinterlegung des Balgdurchmessers, des Balgvolumens und des Arbeitsbereichs für die Drücke in dem Luftfederbalg und/oder die zulässigen Niveauänderungen des Luftfederbalgs erfolgen.

**Fig. 13** zeigt die Parametrierung der Steuereinrichtung 17, mittels welcher die Steuersignale für die Ventileinheiten 76 und/oder Luftfederbalgeinheiten 4 erzeugt und gesendet werden sollen. Jeder Steuereinrichtung 17 erhält im Herstellerwerk eine eindeutige spezifische Kennzeichnung, bspw. eine digitale Kennziffer oder einen Namen, der oder die zur Herstellung, Dokumentation, Parametrierung beim Fahrzeughersteller, zum Betrieb der Druckluftanlage mit Kommunikation zwischen den Sendern und Empfängern und zur Parametrierung oder zur späteren Werksdiagnose verwendet werden kann. Nach dem Start der Parametrierung in einem Verfahrensschritt 112 erfolgt im Verfahrensschritt 113 mittels eines Programmiertools eine Prüfung, ob bereits eine Parametrierung durchgeführt wurde. Ist dies der Fall, verzweigt das Verfahren zum Verfahrensende 114. Anderenfalls erfolgt in einem Verfahrensschritt 115 eine Auswahl einer gewünschten Funktion der Steuereinrichtung 17. Beispielsweise kann eine Spezifikation der Art und Funktion der Luftfederung erfolgen. Beispielsweise kann für eine Vorderachse der Hinweis hinterlegt werden, dass die Vorderachse luftgefedert ist, wobei ergänzend die Anzahl der der Vorderachse zugeordneten Kanäle (einkreisig, zweikreisig) vorgegeben werden kann und/oder spezifiziert werden kann, ob zwischen unterschiedlichen Seiten der Vorderachse eine Querdrosselung erfolgen soll oder nicht. Das Entsprechende kann für die Hinterachse gelten. Für eine Vorlaufachse kann ebenfalls spezifiziert werden, ob diese luftgefedert ist, und die Anzahl der der Vorlaufachse zugeordneten Kanäle kann spezifiziert werden. Ergänzend kann ein Hinweis auf eine etwaige Liftachsfunktion erfolgen. Das Entsprechende gilt für eine Nachlaufachse. Des Weiteren kann im Verfahrensschritt 115 eine Auswahl von Zusatzfunktionen erfolgen. So kann bspw. spezifiziert werden, ob über die Steuereinrichtung 17 eine Regelung eines Dämpfers 27 erfolgen soll, wobei unter Umständen auch Kenngrößen oder Kennfelder für die Dämpferregelung bei der Parametrierung hinterlegt werden. Des Weiteren kann in dem Verfahrensschritt 115 eine Auswahl einer Zusatzfunktion in Form der Aktivierung eines Reifenüberwachungssystems erfolgen mit Ermöglichung des Datenaustausches zwischen der Reifenüberwachungseinheit 24 und der Steuereinrichtung 17. Schließlich kann als Zusatzfunktion im Verfahrensschritt 115 auch die Nutzung von Weg- und/oder Drucksensormodulen indiziert werden, wobei auch eine Spezifikation der jeweils eingesetzten Sensoren erfolgen kann und die Vorgabe von Kalibrierfaktoren, Kalibrierkurven u. ä. erfolgen kann. In einem anschließenden Verfahrensschritt 116 kann eine Parametrierung der Steuereinrichtung 17 durch Daten erfolgen wie bspw. die Zuweisung der spezifischen Kennzeichnungen der Ventileinheiten 76 und/oder Luftfederbalgeinheiten 4, welche von der Steuereinrichtung 17 mit einem Steuersignal versorgt werden sollen. Andererseits können auch in der Steuereinrichtung 17 spezifische Kennzeichnungen von Sensoren hinterlegt werden, deren Messsignale die Steuereinrichtung 17 berücksichtigen und/oder auswerten soll. Des Weiteren kann eine Parametrierung der Steuereinrichtung 17 in dem Verfahrensschritt 116 durch Spezifikation des Fahrzeugherstellers, des Fahrzeugtyps und/oder der Fahrgestellnummer erfolgen.

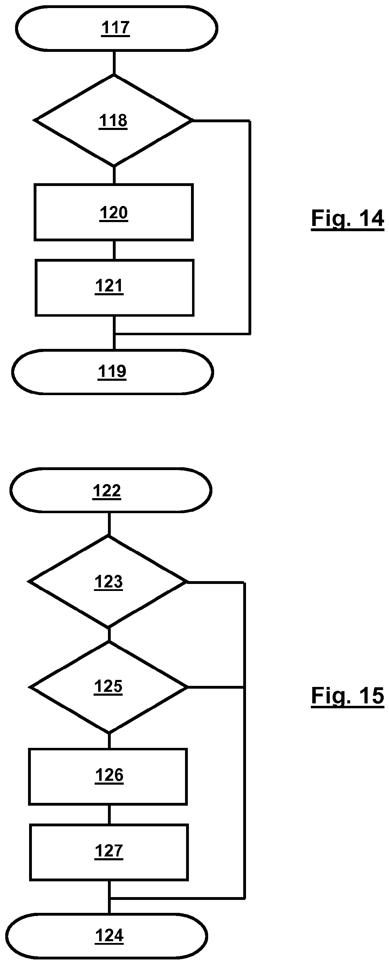

**Fig. 14** zeigt eine Parametrierung am Ende der Fertigung bei dem Fahrzeughersteller, mittels welcher jede Steuereinrichtung 17 mit fahrzeugspezifischen Daten parametriert werden kann. Nach einem Start des Verfahrens in einem Verfahrensschritt 117 erfolgt in einem Verfahrensschritt 118 eine Prüfung, ob bereits eine derartige Endprüfung mit einer Parametrierung erfolgt ist. Ist dieses der Fall, erfolgt eine Verzweigung zum Verfahrensende 119. Anderenfalls erfolgt in dem Verfahrensschritt 120 eine Parametrierung der Steuereinrichtung 17 mit Funktionswerten, bei welchen es sich bspw. um die Höhe des Fahrzeugs für ein unteres Niveau der Luftfederbälge, ein mittleres Niveau der Luftfederbälge und ein oberes Niveau der Luftfederbälge handeln, wobei die Steuereinrichtung 17 die derart parametrierten Niveauhöhen berücksichtigt für die Erzeugung der Steuersignale zur Ansteuerung der Ventileinheit 76 bzw. der Luftfederbalgeinheiten 4. Des Weiteren kann in dem Verfahrensschritt 120 eine Parametrierung mit Druckwerten und/oder Achsgewichten erfolgen bei leerem Fahrzeug, bei teilbeladenem Fahrzeug mit angehobener Liftachse, bei teilbeladenem Fahrzeug mit abgesenkter Liftachse und bei vollbeladenem Fahrzeug. Des Weiteren kann eine Vorgabe von Grenzwerten, bspw. für die Druckwerte erfolgen, und es können zu erzeugende Warnmeldungen für unterschiedliche Warnsituationen vorgegeben werden. In einem hieran anschließenden Verfahrensschritt 121 erfolgt eine Parametrierung der Steuereinrichtung 17 mit Zusatzfunktionen wie bspw. die Aktivierung und Deaktivierung und Spezifikation einer Dämpferregelung oder die Aktivierung und Deaktivierung eines Reifenüberwachungssystems.

Möglich ist, dass ein Austausch einer defekten Luftfederbalgeinheit 4, einer Ventileinheit 76 oder einer defekten Sensoreinheit erforderlich ist. Hierzu wird die Luftfederbalgeinheit 4, die Ventileinheit 76 oder die Sensoreinheit parametriert, was vorab im Herstellerwerk erfolgt. Hierzu muss der Fahrzeughersteller oder die Werkstatt die notwendigen Daten dem Herstellerwerk der Luftfederbalgeinheit 4, der Ventileinheit 76 oder des Sensormoduls zur Verfügung stellen. Möglich ist aber auch, dass die Parametrierung vorab beim Fahrzeughersteller erfolgt. Hierzu lädt der Fahrzeughersteller aus seiner Fahrzeugdatenbank die entsprechenden Daten in die Luftfederbalgeinheit 4, die Ventileinheit 76 oder das Sensormodul und parametriert hierdurch die entsprechende Einheit. Möglich ist aber auch, dass die Parametrierung mittels eines Diagnosetools in der Werkstatt erfolgt. Hierzu wird der Luftfederbalgeinheit 4, der Ventileinheit 76 oder dem Sensormodul ein Zugangscode für die Parametrierung beigelegt oder der Zugangscode wird gesondert der autorisierten Werkstatt zugesendet. Nach Eingabe dieses Zugangscodes kann dann die Parametrierung der Luftfederbalgeinheit 4, der Ventileinheit 76 oder des Sensormoduls durch Eingabe der relevanten Daten erfolgen. Hieran anschließend wird die Luftfederbalgeinheit 4, die Ventileinheit 76 oder das Sensormodul in das Fahrzeug eingebaut. Schließlich wird die Steuereinrichtung 17 mittels eines Diagnosetools upgedatet, wobei dies mittels einer manuellen Eingabe via einer Eingabemaske am Diagnosetool oder automatisiert über die Fahrzeugdatenbank vom Fahrzeughersteller erfolgen kann.

Für den Fall, dass eine Steuereinrichtung 17 ausgetauscht werden muss, muss auch die Steuereinrichtung 17 mittels des Diagnosetools parametriert werden. Dies kann erfolgen vorab im Herstellerwerk der Steuereinrichtung 17. Hierzu muss der Fahrzeughersteller oder die Werkstatt die notwendigen Daten dem Herstellerwerk der Steuereinrichtung 17 zur Verfügung stellen. Möglich ist aber auch, dass die Parametrierung vorab beim Fahrzeughersteller erfolgt. Hierzu lädt der Fahrzeughersteller aus seiner Fahrzeugdatenbank die entsprechenden Daten in die Steuereinrichtung 17 und parametriert dadurch die entsprechende Steuereinrichtung 17. Schließlich ist auch möglich, dass die Parametrierung mittels des Diagnosetools in der Werkstatt erfolgt. Hierzu werden der Steuereinrichtung 17 ein Zugangscode für die Parametrierung beigelegt oder der Zugangscode wird gesondert der autorisierten Werkstatt übersendet. Nach Eingabe dieses Zugangscodes kann dann die Parametrierung durch Eingabe der Daten erfolgen. Hieran anschließend wird die Steuereinrichtung 17 in das Fahrzeug eingebaut. Daran anschließend kann dann die Steuereinrichtung 17 mittels des Diagnosetools upgedatet werden, was manuell via Eingabemaske am Diagnosetool oder automatisiert über die Fahrzeugdatenbank vom Fahrzeughersteller erfolgen kann.

Möglich ist aber auch, dass eine bestehende Druckluftanlage oder Luftfederungsanlage erweitert oder verändert werden soll. Ein hierbei einsetzbares Verfahren zeigt **Fig. 15****.** Nach einem Start des Verfahrens in einem Verfahrensschritt 122 erfolgt in einem Verfahrensschritt 123 eine Abfrage mittels eines Programmiertools, ob eine Parametrierung durchgeführt werden soll. Ist dieses nicht der Fall, verzweigt das Verfahren zum Verfahrensende 124. Anderenfalls wird in einem Verfahrensschritt 125 eine Sicherheitsabfrage zur Autorisierung durchgeführt, bei welcher bspw. ein PIN oder eine anderweitige Autorisierung abgefragt und geprüft werden kann. Führt die Sicherheitsabfrage zu dem Ergebnis, dass keine Autorisierung vorliegt, verzweigt das Verfahren zum Verfahrensende 124. Anderenfalls wird in einem Verfahrensschritt 126 eine Parametrierung der erwünschten Funktionen durchgeführt, welche vergleichbar ist zur Parametrierung bei der Fahrzeugherstellung. Hieran anschließend erfolgt in dem Verfahrensschritt 127 eine Parametrierung mit den erforderlichen Daten, was vergleichbar ist mit der entsprechenden Parametrierung bei der Fahrzeugherstellung oder der Prüfung am Ende des Herstellungsverfahrens.

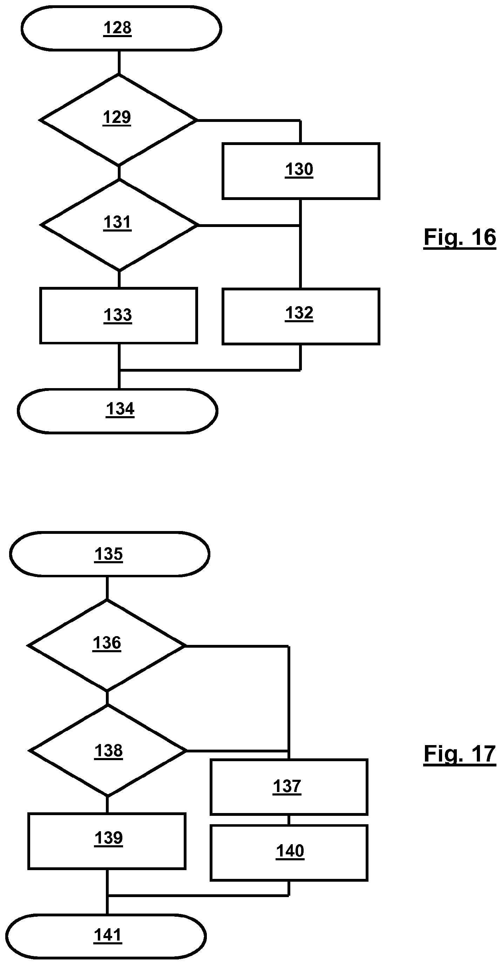

**Fig. 16** zeigt ein Verfahren zur Erkennung und Behandlung von in der Druckluftanlage auftretenden Fehlern. Nach einem Start des Verfahrens im Verfahrensschritt 128 erfolgt in dem Verfahrensschritt 129 eine Prüfung, ob ein Fehler in der Druckluftanlage, insbesondere in der Steuereinrichtung 17, der Ventileinheit 76 und/oder der Luftfederbalgeinheit 4 und/oder in der Kommunikation mit der Steuereinrichtung 17 erkannt worden ist. Ist dies der Fall, erfolgt eine Verzweigung zum Verfahrensschritt 130, während anderenfalls das Verfahren mit dem Verfahrensschritt 131 fortgesetzt wird. In dem Verfahrensschritt 130 wird eine Fehlermeldung an die Steuereinrichtung 17 gesendet. Hieran anschließend wird das Verfahren mit dem Verfahrensschritt 132 fortgeführt. In dem Verfahrensschritt 131 kann geprüft werden, ob in der Ventileinheit 76 oder der Luftfederbalgeinheit 4 ein Magnetventilfehler erkannt worden ist, bspw. durch Prüfung der von einem entsprechenden Sensor gemeldeten Stellung eines Ventilelements des Magnetventils. Ist dies der Fall, erfolgt eine Verzweigung zu dem Verfahrensschritt 132, während anderenfalls der Verfahrensschritt 133 ausgeführt wird. In dem Verfahrensschritt 132 erfolgt eine Abschaltung der Magnetventile, womit vorzugsweise die Magnetventile infolge der Beaufschlagung durch eine Feder in ihre Sperrstellung überführt werden, so dass kein weiterer Druckluftfluss erfolgt und somit ein eingenommener Betriebszustand der Luftfederbälge beibehalten wird. Hingegen können in dem Verfahrensschritt 133 die Ventilfunktionen ausgeführt werden. Nach Durchführung der Verfahrensschritte 132, 133 gelangt das Verfahren zum Verfahrensende 134.

**Fig. 17** zeigt ein mögliches Verfahren, wie eine Erkennung und Behandlung eines Fehlers in der Steuereinrichtung 17 erfolgen kann. Nach einem Start des Verfahrens in einem Verfahrensschritt 135 erfolgt in einem Verfahrensschritt 136 die Prüfung, ob ein Fehler in der Ventileinheit 76 oder der Luftfederbalgeinheit 4 oder in der Kommunikation mit dieser erkannt worden ist. Ist dies der Fall, erfolgt eine Durchführung des Verfahrensschritts 137, während anderenfalls der Verfahrensschritt 138 durchgeführt wird. In dem Verfahrensschritt 137 wird eine Fehlermeldung an die Ventileinheit 76 oder die Luftfederbalgeinheit 4 gesendet bzw. ein entsprechendes Steuersignal, womit eine Abschaltung der Magnetventile der Luftfederbalgeinheit 4 oder der Ventileinheit 76 erfolgt und vorzugsweise eine Sperrstellung eingenommen wird. In dem Verfahrensschritt 138 wird geprüft, ob eine Plausibilitätsstörung vorhanden ist. Falls dies der Fall ist, wird ebenfalls der Verfahrensschritt 137 durchgeführt. Anderenfalls erfolgt die Durchführung des Verfahrensschritts 139. Nach Durchführung des Verfahrensschritts 137 erfolgt die Durchführung des Verfahrensschritts 140. In dem Verfahrensschritt 140 wird eine Fehlermeldung an die Fahrzeugdatenkommunikation oder an den Fahrer gesendet. In dem Verfahrensschritt 139 werden die Luftfederungsfunktionen ausgeführt. Nach Durchführung der Verfahrensschritte 139, 140 ist das Verfahren zu seinem Verfahrensende 141 gelangt.

Die Steuereinrichtung 17 kann für einige hier dargestellte Ausführungsformen auch als Master-Steuereinrichtung bezeichnet werden, da in dieser Signale der Messsensoren gesammelt werden und/oder durch diese die Ansteuerung mindestens einer Ventileinheit 76 und/oder Luftfederbalgeinheit 4 mit mindestens einem Steuersignal erfolgt. Vorzugsweise arbeitet diese Master-Steuereinrichtung 17 auch mit den Reifenüberwachungseinheiten 24. Wie erläutert kann diese Master-Steuereinrichtung 17 auch in eine anderweitige Einrichtung integriert sein und/oder multifunktional ausgebildet sein, in dem diese weitere Funktionen wie bspw. die Steuerung der Luftaufbereitung, der Einstellung des Fahrersitzes und der Ansteuerung der Kabinenluftfederung dient. Ebenfalls mit drahtlosen Sendern und Empfängern ausgestattet sein kann eine Wischersteuerung, ein Fensterheber, eine Verstelleinrichtung für einen Spiegel mit einem Aktuator und/oder eine Spiegelheizung, eine Lichtsteuerung, ein Telematiksystem, wobei auch hier eine drahtlose Kommunikation mit der Steuereinrichtung 17 möglich ist.

Möglicher Vorteil der hier beschriebenen Ausgestaltung ist, dass eine direkte Diagnose über ein Laptop oder Smartphone mittels einer geschützten Kommunikation möglich ist, ohne dass ein Anschluss über eine Schnittstelle geschaffen werden muss. Ein weiterer Vorteil ist, dass bei einer Fehlererkennung die einzelnen Module über die Steuereinrichtung 17 in einen sicheren Status geschaltet werden können, während gleichzeitig die Fehlfunktion dem Fahrzeugführungsrechner gemeldet werden kann. Auch kann auf einfache Weise bei einer fehlenden Kommunikation eine Fehlfunktion erkannt werden. Die hier beschriebene Ausgestaltung führt zu einer Vereinfachung der Verkabelung, da unter Umständen lediglich die Bereitstellung einer Stromversorgung sowie der Verrohrung für die pneumatischen Leitungsverbindungen, insbesondere zur Druckluftversorgung, erforderlich sind. Es kann eine Vereinheitlichung erfolgen durch Verwendung gleicher Steuereinheiten und Baueinheiten für unterschiedliche Funktionen, wobei je nach Typ des Fahrzeugs und Funktionsumfang die Zahl der eingesetzten Steuereinheiten variiert werden kann mit einfacher Kommunikation zwischen diesen unabhängig von der Zahl der Steuereinheiten. In dem hier beschriebenen Rahmen kann eine Software auch multipel nutzbar sein mit flexibler Parametrierung der einzelnen Module unter Nutzung der datenlosen Übertragung. Wenn ein Austausch von relevanten Informationen, Steuersignalen und/oder Messsignalen über die hier erläuterte drahtlose Verbindung erfolgt, kann der Informationsfluss über ein Bussystem reduziert werden, womit bei einem CAN die Buslast reduziert werden kann.

Für die vorliegende Erfindung umfassen "Steuersignale" jedwede steuernden Signale. Ein "Niveau-Steuersignal" ist ein spezielles derartiges Steuersignal, nämlich ein solches, welches automatisch eine Beibehaltung oder Veränderung des Niveaus herbeiführt. Eine weitere Sonderform eines Steuersignals ist ein "Hebe-Senk-Steuersignal", welches auf einer manuellen Vorgabe des Fahrers zum willkürlichen Heben und/Senken eines Fahrzeugaufbaus, bspw. zum Be- und Entladen des Fahrzeugs an einer Rampe, basiert.

Im Gegensatz zu den eingangs angeführten mobilen Fernbedienungen sind vorzugsweise die hier beschriebenen Komponenten mit den Sendern und Empfängern fahrzeugfest angeordnet.

Eine Übertragung der erfindungsgemäßen drahtlosen Kommunikation ist im Rahmen der Erfindung auch auf den eingangs angeführten Stand zu Luftfederungsanlagen und Druckluftanlagen möglich.

### BEZUGSZEICHENLISTE

- 1: Nutzfahrzeug-Druckluftanlage
- 2: Luftfederbalg
- 3: Vorratsbehälter
- 4: Luftfederbalgeinheit
- 5: Ventileinrichtung
- 6: Anschluss elektrische Leistungsversorgung
- 7: Versorgungsanschluss
- 8: Entlüftung
- 9: Luftfederbalgkanal
- 10: Niveausensor
- 11: Drucksensor
- 12: elektronische Steuereinheit
- 13: Ventil
- 14: Ventil
- 15: Empfänger
- 16: Sender
- 17: Steuereinrichtung
- 18: Anschluss elektrische Leistungsversorgung
- 19: CAN-Bus
- 20: elektronische Steuereinheit
- 21: Sender
- 22: Empfänger
- 23: Fahrzeugrad
- 24: Reifenüberwachungseinheit
- 25: Sender
- 26: Leitung
- 27: Dämpfer
- 28: Anschluss elektrische Leistungsversorgung
- 29: Sender
- 30: Empfänger
- 31: Leitung
- 32: Luftaufbereitungseinrichtung
- 33: Liftachse
- 34: Tragbalgeinheit
- 35: Liftbalgeinheit
- 36: Ventil
- 37: Anschluss
- 38: Kabinenluftfedermodul
- 39: Magnetventil
- 40: Kabinenluftfederbalg
- 41: Sender
- 42: Empfänger
- 43: Fahrersitzmodul
- 44: Luftfederbalg
- 45: Fahrersitz
- 46: Magnetventil
- 47: Magnetventil
- 48: Verstell-Aktuator
- 49: Drucksensors
- 50: Sitzpositionssensor
- 51: Zündschlüsseleinheit
- 52: Steuereinheit
- 53: Anschluss elektrische Leistungsversorgung
- 54: Sender
- 55: Empfänger
- 56: Anschluss
- 57: elektropneumatische Bremsanlage
- 58: Betriebsbremszylinder
- 59: Kombi-Bremszylinder
- 60: Bremsteuereinheit
- 61: Ventileinrichtung
- 62: Steuermodul
- 63: Steuereinheit
- 64: Anschluss elektrische Leistungsversorgung
- 65: Anschluss CAN-Bus
- 66: Sender
- 67: Empfänger
- 68: Parkventil
- 69: Vorratsbehälter
- 70: Fernbedienung
- 71: Sender
- 72: Empfänger
- 73: Magnetventil
- 74: Magnetventil
- 75: Magnetventil
- 76: Ventileinheit
- 77: Achsmodul
- 78: Liftachseinheit
- 79: Leitung
- 80: Betätigungselement
- 81: Betätigungselement
- 82: Betätigungselement
- 83: Träger
- 84: Federfußpunkt
- 85: Federfußpunkt
- 86: Leitung
- 87: Einlassanschluss
- 88: Einlassanschluss
- 89: Magnetventil
- 90: Magnetventil
- 91: Entlüftungsanschluss
- 92: Entlüftungsanschluss
- 93: Anschluss
- 94: Anschluss
- 95: Steuerleitung
- 96: Steuerkammer
- 97: Steuerkolben
- 98: Ventilkörper
- 99: Ventilsitz
- 100: Luftfederbalganschluss
- 101: Steuerleitung
- 102: Steuerkammer
- 103: Steuerkolben
- 104: Druckfeder
- 105: Zweigleitung
- 106: Drucksensor
- 107: Niveausensor
- 108: Verfahrensschritt
- 109: Verfahrensschritt
- 110: Verfahrensende
- 111: Verfahrensschritt
- 112: Verfahrensschritt
- 113: Verfahrensschritt
- 114: Verfahrensende
- 115: Verfahrensschritt
- 116: Verfahrensschritt
- 117: Verfahrensschritt
- 118: Verfahrensschritt
- 119: Verfahrensende
- 120: Verfahrensschritt
- 121: Verfahrensschritt
- 122: Verfahrensschritt
- 123: Verfahrensschritt
- 124: Verfahrensende
- 125: Verfahrensschritt
- 126: Verfahrensschritt
- 127: Verfahrensschritt
- 128: Verfahrensschritt
- 129: Verfahrensschritt
- 130: Verfahrensschritt
- 131: Verfahrensschritt
- 132: Verfahrensschritt
- 133: Verfahrensschritt
- 134: Verfahrensende
- 135: Verfahrensschritt
- 136: Verfahrensschritt
- 137: Verfahrensschritt
- 138: Verfahrensschritt
- 139: Verfahrensschritt
- 140: Verfahrensschritt
- 141: Verfahrensende

## Patentansprüche

1. Steuereinrichtung (17) mit einer elektronischen Steuereinheit (20) mit Steuerlogik zur Erzeugung eines Niveau-Steuersignals, auf Grundlage dessen eine automatische Niveauregelung eines Luftfederbalgs (2) erfolgt, wobei ein Sender (21) vorhanden ist, über welchen das Niveau-Steuersignal drahtlos an einen beabstandet angeordneten Empfänger (15) übertragbar ist, **dadurch gekennzeichnet, dass** die Steuereinheit (20) integraler Bestandteil einer Druckluftaufbereitungseinheit (32), einer Reifenüberwachungseinheit, einer elektronischen Bremssteuereinheit (60) oder einer Telematikeinheit ist.

2. Steuereinrichtung (17) nach Anspruch 1, **dadurch gekennzeichnet, dass** die Steuereinrichtung (17) einen Empfänger (22) zum drahtlosen Empfangen eines oder des Betriebszustandes der Luftfederbalgeinheit (4), eines Luftfederbalges (2) und/oder mindestens eines Ventils (13, 14; 73, 74, 75) zum Be- und/oder Entlüften des Luftfederbalges (2) aufweist.

3. Steuereinrichtung (17) nach Anspruch 1 oder 2, **dadurch gekennzeichnet, dass** der oder ein Empfänger (22) der Steuereinrichtung (17) zum drahtlosen Empfangen eines Messsignals ausgebildet ist, welches der Steuereinheit (20) zugeführt wird, wobei die Steuereinheit (20) mit Steuerlogik ausgestattet ist, welche das Messsignal über den oder einen Sender (16) an eine externe Baueinheit aussendet.

4. Steuereinrichtung (17) nach einem der Ansprüche 1 bis 3, **dadurch gekennzeichnet, dass** mindestens ein Sender (21) und/oder Empfänger (22) beabstandet von der zugehörigen Steuereinheit (20) angeordnet ist und über eine Leitung (26) mit der zugeordneten Steuereinheit (20) verbunden ist.

5. Steuereinrichtung (17) nach einem der vorhergehenden Ansprüche, **dadurch gekennzeichnet, dass** die Steuereinheit (20) mit Steuerlogik ausgestattet ist, mittels welcher eine Parametrierung der Luftfederbalgeinheit (4), der Steuereinrichtung (17) oder der Ventileinheit (76) insbesondere mit
a) einer individuellen Kennzeichnung der Luftfederbalgeinheit (4), der Ventileinheit (76) oder der Steuereinrichtung (17),
b) Fahrzeugherstellers,
c) des Fahrzeugtyps,
d) der Fahrgestellnummer,
e) der Funktionsart und/oder
f) Kenndaten mindestens eines Luftfederbalges (2)
erfolgt.

6. Steuereinrichtung (17) nach einem der vorhergehenden Ansprüche, **dadurch gekennzeichnet, dass** die Steuereinheit (20) der Steuereinrichtung (17) mit Steuerlogik ausgestattet ist, mittels welcher eine Auswahl von Funktionen und/oder Parametrisierung der Steuereinrichtung (17) erfolgt.

7. Steuereinrichtung (17) nach einem der vorhergehenden Ansprüche, **dadurch gekennzeichnet, dass** die Steuereinheit (20) der Steuereinrichtung (17) mit Steuerlogik ausgestattet ist, mittels welcher in einer Endprüfung beim Fahrzeughersteller eine Parametrisierung von Funktionswerten und/oder von Zusatzfunktionen erfolgt.

8. Steuereinrichtung (17) nach einem der Ansprüche 5 bis 7, **dadurch gekennzeichnet, dass** die Steuereinheit (20) mit Steuerlogik ausgestattet ist, mittels welcher vor der Parametrisierung eine Autorisierung zur Parametrierung geprüft wird.

9. Steuereinrichtung (17) nach einem der vorhergehenden Ansprüche, **dadurch gekennzeichnet, dass** die Steuereinheit (20) mit Steuerlogik ausgestattet ist,
a) mittels welcher eine Fehlfunktion erkannt wird und
b) welche bei erkannter Fehlfunktion automatisch einen Failsafe-Modus der Luftfederbälge (2) herbeiführt.

10. Nutzfahrzeug-Druckluftanlage (1)
a) mit einer Ventileinheit (76) mit mindestens einem Ventil (73; 74; 75), welches mit mindestens einem Luftfederbalg (2) verbunden ist und über welches mindestens ein Luftfederbalg (2) be- und/oder entlüftet werden kann, wobei die Ventileinheit (76) einen drahtlosen Empfänger (15) zum Empfangen eines Steuersignals zur Steuerung des Be-und/oder Entlüftens mindestens eines Luftfederbalgs (2) aufweist, und
b) mit einer Steuereinrichtung (17) nach einem der vorhergehenden Ansprüche,
c) wobei der Sender (21) der Steuereinrichtung (17) das Steuersignal drahtlos an den Empfänger (15) der Luftfederbalgeinheit (4) oder der Ventileinheit (76) überträgt.

11. Nutzfahrzeug-Druckluftanlage (1) nach Anspruch 10, **dadurch gekennzeichnet, dass**
a) die Steuereinheit (20) der Steuereinrichtung (17) mit Steuerlogik ausgestattet ist, welche
aa) mehrere Niveau-Steuersignale für mehrere Luftfederbälge (2) erzeugt und
ab) aus den mehreren Niveau-Steuersignalen ein Signal erzeugt,
b) der Sender (21) der Steuereinrichtung (17) das Signal mit den mehreren Niveau-Steuersignalen für unterschiedliche Luftfederbälge (2) überträgt, und/oder
c) der Empfänger (15) der Luftfederbalgeinheit (4) oder der Ventileinheit (76) das Signal empfängt, in welchem mehrere Steuersignale für unterschiedliche Luftfederbälge (2) enthalten sind, und in der Luftfederbalgeinheit (4) oder der Ventileinheit (76) eine Steuereinheit (12) vorhanden ist, die mit Steuerlogik ausgestattet ist, welche aus dem Signal mit den mehreren Steuersignalen das für die Luftfederbalgeinheit (4) oder die Ventileinheit (76) relevante Steuersignal ermittelt.

12. Nutzfahrzeug-Druckluftanlage (1) nach Anspruch 10 oder 11, **dadurch gekennzeichnet, dass** die Luftfederbalgeinheit (4) einen Sender (16) zur drahtlosen Übertragung eines Betriebszustandes der Luftfederbalgeinheit (4) aufweist.

13. Nutzfahrzeug-Druckluftanlage (1) nach einem der Ansprüche 10 bis 12, **dadurch gekennzeichnet, dass**
a) die Steuereinheit (20) der Steuereinrichtung (17) mit Steuerlogik ausgestattet ist, welche
aa) mehrere Niveau-Steuersignal für mehrere Luftfederbälge (2) erzeugt und
ab) aus den mehreren Niveau-Steuersignalen ein Signal erzeugt,
b) der Sender (21) der Steuereinrichtung (17) das Signal mit den mehreren Niveau-Steuersignale für unterschiedliche Luftfederbälge (2) überträgt, und/oder
c) der Empfänger (15) der Luftfederbalgeinheit (4) oder der Ventileinheit (76) das Signal empfängt, in welchem mehrere Steuersignale für unterschiedliche Luftfederbälge (2) enthalten sind, und in der Luftfederbalgeinheit (4) oder der Ventileinheit (76) eine Steuereinheit (12) vorhanden ist, die mit Steuerlogik ausgestattet ist, welche aus dem Signal mit den mehreren Steuersignalen das für die Luftfederbalgeinheit (4) oder die Ventileinheit (76) relevante Steuersignal ermittelt.

14. Nutzfahrzeug-Druckluftanlage (1) nach einem der Ansprüche 10 bis 13, **dadurch gekennzeichnet, dass**
a) die Luftfederbalgeinheit (4) oder die Ventileinheit (76) mit zwei Luftfederbälgen (2) verbunden ist, wobei die beiden Anschlüsse unterschiedlichen Achsen oder unterschiedlichen Seiten des Nutzfahrzeugs zugeordnet sind und/oder
b) mit der Luftfederbalgeinheit (4) oder der Ventileinheit (76) eine Liftachseinheit (35) oder eine Tragbalgeinheit (34) gebildet ist.

15. Nutzfahrzeug-Druckluftanlage (1) nach einem der Ansprüche 10 bis 14, **dadurch gekennzeichnet, dass** der oder ein Empfänger (15; 22) der Luftfederbalgeinheit (4), der Ventileinheit (76) oder der Steuereinrichtung (17) zum drahtlosen Empfangen eines Messsignals ausgebildet ist, welches einer oder der Steuereinheit (12; 20) zugeführt wird, wobei die Steuereinheit (12; 20) mit Steuerlogik ausgestattet ist, welche das Messsignal über den oder einen Sender (16; 21) an eine externe Baueinheit aussendet.

16. Nutzfahrzeug-Druckluftanlage (1) nach einem der Ansprüche 10 bis 15, **dadurch gekennzeichnet, dass** die Luftfederbalgeinheit (4), die Ventileinheit (76) oder die Steuereinrichtung (17) mindestens ein manuelles Betätigungselement (81, 82, 83) aufweist.

17. Nutzfahrzeug-Druckluftanlage (1) nach einem der Ansprüche 10 bis 16, **dadurch gekennzeichnet, dass** mindestens ein Sender (21; 66) und/oder Empfänger (22; 67) beabstandet von der zugehörigen Steuereinheit (12; 20; 63) angeordnet ist und über eine Leitung (26) mit der zugeordneten Steuereinheit (12; 20; 63) verbunden ist.

## Claims

1. Control device (17) with an electronic control unit (20) comprising control logic for generating a level control signal on the basis of which an automatic level control of an air suspension bellow (2) is provided, a transmitter (21) being provided by which it is possible to transmit the level control signal wirelessly to a remote receiver (15), **characterised in that** the control unit (20) is an integral component of a compressed air processing unit (32), a tire monitoring unit, an electronic brake control unit (60) or a telematics unit.

2. Control device (17) of claim 1, **characterised in that** the control device (17) comprises a receiver (22) for wirelessly receiving an operating state or the operating state of the air suspension bellow unit (4), an air suspension bellow (2) and/or at least one valve (13, 14; 73, 74, 75) for aerating and/or deaerating the air suspension bellow (2).

3. Control device (17) of claim 1 or 2, **characterised in that** the or a receiver (22) of the control device (17) is configured for wirelessly receiving a measurement signal which is supplied to the control unit (20), the control unit (20) comprising control logic which transmits the measurement signal via the or a transmitter (16) to an external constructional unit.

4. Control device (17) of one of claims 1 to 3, **characterised in that** at least one transmitter (21) and/or receiver (22) is arranged remote from the associated control unit (20) and connected via a line (26) to the associated control unit (20).

5. Control device (17) of one of the preceding claims, **characterised in that** the control unit (20) comprises control logic by which the air suspension bellow unit (4), the control device (17) or the valve unit (76) is parameterised in particular with
a) an individual identification of the air suspension bellow unit (4), the valve unit (76) or the control device (17),
b) the manufacturer of the vehicle,
c) the vehicle type,
d) the vehicle identification number,
e) the type of function and/or
f) characteristic data of at least one air suspension bellow (2).

6. Control device (17) of one of the preceding claims, **characterised in that** the control unit (20) of the control device (17) comprises control logic by means of which functions and/or parameterisations of the control device (17) are selected.

7. Control device (17) of one of the preceding claims, **characterised in that** the control unit (20) of the control device (17) comprises control logic by means of which at the manufacturer of the vehicle in a final test functional values and/or additional functions are parameterised.

8. Control device (17) of one of claims 5 to 7, **characterised in that** the control unit (20) comprises control logic by means of which an authorisation for the parameterisation is checked before performing a parameterisation.

9. Control device (17) of one of the preceding claims, **characterised in that** the control unit (20) comprises control logic
a) by means of which it is possible to detect a malfunction and
b) which in the case of a detected malfunction automatically induces a failsafe-mode of the air suspension bellows (2).

10. Commercial vehicle compressed air system (1)
a) comprising a valve unit (76) with at least one valve (73; 74; 75) which is connected to at least one air suspension bellow (2) and by which it is possible to aerate and/or deaerate at least one air suspension bellow (2), the valve unit (76) comprising a wireless receiver (15) for receiving a control signal for controlling the aeration and/or deaeration of at least one air suspension bellow (2) and
b) with a control device (17) of one of the preceding claims,
c) the transmitter (21) of the control device (17) transmitting the control signal wirelessly to the receiver (15) of the air suspension bellow unit (4) or the valve unit (76).

11. Commercial vehicle compressed air system (1) of claim 10, **characterised in that**
a) the control unit (20) of the control device (17) comprises control logic which
aa) generates a plurality of level control signals for a plurality of air suspension bellows (2) and
ab) generates one signal from the plurality of level control signals,
b) the transmitter (21) of the control device (17) transmits the signal with the plurality of level control signals to different air suspension bellows (2) and/or
c) the receiver (15) of the air suspension bellow unit (4) or the valve unit (76) receives the signal containing a plurality of control signals for a plurality of air suspension bellows (2), and a control unit (12) is provided in the air suspension bellow unit (4) or the valve unit (76) having control logic which determines the control signal being relevant for the air suspension bellow unit (4) or the valve unit (76) from the signal containing the plurality of control signals.

12. Commercial vehicle compressed air system (1) of claim 10 or 11, **characterised in that** the air suspension bellow unit (4) comprises a transmitter (16) for wirelessly transmitting an operating state of the air suspension bellow unit (4).

13. Commercial vehicle compressed air system (1) of one of claims 10 to 12, **characterised in that**
a) the control unit (20) of the control device (17) comprises control logic which
aa) generates a plurality of level control signals for a plurality of air suspension bellows (2) and
ab) generates one signal from the plurality of level control signals,
b) the transmitter (21) of the control device (17) transmits the signal containing the plurality of level control signals to different air suspension bellows (2) and/or
c) the receiver (15) of the air suspension bellow unit (4) or the valve unit (76) receives the signal containing the plurality of control signals for different air suspension bellows (2), and in the air suspension bellow unit (4) or the valve unit (76) a control unit (12) is provided having control logic which determines the control signal being relevant for the air suspension bellow unit (4) or the valve unit (76) from the signal containing the plurality of control signals.

14. Commercial vehicle compressed air system (1) of one of claims 10 to 13, **characterised in that**
a) the air suspension bellow unit (4) or the valve unit (76) is connected to two air suspension bellows (2), the two ports being associated with different axles or different sides of the commercial vehicle and/or
b) a lift axle unit (35) or a supporting bellow unit (34) comprises the air suspension bellow unit (4) or the valve unit (76).

15. Commercial vehicle compressed air system (1) of one of claims 10 to 14, **characterised in that** the or a receiver (15; 22) of the air suspension bellow unit (4), of the valve unit (76) or of the control device (17) is configured for wirelessly receiving a measurement signal which is supplied to a or the control unit (12; 20), the control unit (12; 20) comprising control logic which transmits the measurement signal via the or a transmitter (16; 21) to an external constructional unit.

16. Commercial vehicle compressed air system (1) of one of claims 10 to 15, **characterised in that** the air suspension bellow unit (4), the valve unit (76) or the control device (17) comprises at least one manual actuation element (81, 82, 83).

17. Commercial vehicle compressed air system (1) of one of claims 10 to 16, **characterised in that** at least one transmitter (21; 66) and/or receiver (22; 67) is arranged remote from the associated control unit (12; 20; 63) and connected via a line (26) to the associated control unit (12; 20; 63).

## Revendications

1. Dispositif de commande (17) avec une unité de commande électronique (20) avec une logique de commande pour la génération d'un signal de commande de niveau, sur la base duquel est effectuée une régulation de niveau automatique d'un soufflet de suspension pneumatique (2), un émetteur (21) étant prévu, par l'intermédiaire duquel le signal de commande de niveau peut être transmis sans fil à un récepteur distant (15), **caractérisé en ce que** l'unité de commande (20) fait partie intégrante d'une unité de traitement d'air comprimé (32), d'une unité de surveillance de pneus, d'une unité de commande de freinage électronique (60) ou d'une unité de télématique.

2. Dispositif de commande (17) selon la revendication 1, **caractérisé en ce que** l'unité de commande (17) comprend un récepteur (22) pour la réception sans fil d'un ou de l'état de fonctionnement de l'unité de soufflet de suspension pneumatique (4), d'un soufflet de suspension pneumatique (2) et/ou d'au moins une vanne (13, 14 ; 73, 74, 75) pour la ventilation et/ou la purge du soufflet de suspension pneumatique (2).

3. Dispositif de commande (17) selon la revendication 1 ou 2, **caractérisé en ce que** le ou un récepteur (22) du dispositif de commande (17) est conçu pour la réception sans fil d'un signal de mesure qui est entré dans l'unité de commande (20), l'unité de commande (20) étant munie d'une logique de commande qui envoie le signal de mesure par l'intermédiaire du ou d'un émetteur (16) à une unité modulaire externe.

4. Dispositif de commande (17) selon l'une des revendications 1 à 3, **caractérisé en ce qu'**au moins un émetteur (21) et/ou un récepteur (22) est disposé à distance de l'unité de commande (20) correspondante et est relié par l'intermédiaire d'une ligne (26) avec l'unité de commande (20) correspondante.

5. Dispositif de commande (17) selon l'une des revendications précédentes, **caractérisé en ce que** l'unité de commande (20) est munie d'une logique de commande au moyen de laquelle un paramétrage de l'unité de soufflet de suspension pneumatique (4), du dispositif de commande (17) ou de l'unité de vanne (76) est effectué, plus particulièrement avec
a) une identification individuelle de l'unité de soufflet de suspension pneumatique (4), de l'unité de vanne (76) ou du dispositif de commande (17),
b) le fabricant du véhicule,
c) le type de véhicule,
d) le numéro de châssis,
e) le type de fonction et/ou
f) des données caractéristiques d'au moins un soufflet de suspension pneumatique (2).

6. Dispositif de commande (17) selon l'une des revendications précédentes, **caractérisé en ce que** l'unité de commande (20) du dispositif de commande (17) est munie d'une logique de commande au moyen de laquelle une sélection de fonctions et/ou un paramétrage du dispositif de commande (17) est effectué.

7. Dispositif de commande (17) selon l'une des revendications précédentes, **caractérisé en ce que** l'unité de commande (20) du dispositif de commande (17) est munie d'une logique de commande au moyen de laquelle, lors d'une vérification finale auprès du fabricant du véhicule, un paramétrage des valeurs fonctionnelles et/ou de fonctions supplémentaires est effectué.

8. Dispositif de commande (17) selon l'une des revendications 5 à 7, **caractérisé en ce que** l'unité de commande (20) est munie d'une logique de commande au moyen de laquelle, avant le paramétrage, une autorisation de paramétrage est vérifiée.

9. Dispositif de commande (17) selon l'une des revendications précédentes, **caractérisé en ce que** l'unité de commande (20) est munie d'une logique de commande
a) au moyen de laquelle une fonction d'erreur est détectée et
b) qui, lorsqu'une fonction d'erreur est détectée, met les soufflets de suspension pneumatiques (2) en mode « failsafe ».

10. Installation d'air comprimé de véhicule utilitaire (1)
a) avec une unité de vanne (76) avec au moins une vanne (73 ; 74 ; 75) qui est reliée avec au moins un soufflet de suspension pneumatique (2) et par l'intermédiaire de laquelle au moins un soufflet de suspension pneumatique (2) peut être ventilé et/ou purgé, l'unité de vanne (76) comprenant un récepteur sans fil (15) pour la réception d'un signal de commande pour le contrôle de la ventilation et/ou de la purge d'au moins un soufflet de suspension pneumatique (2) et
b) avec un dispositif de commande (17) selon l'une des revendications précédentes,
c) l'émetteur (21) du dispositif de commande (17) transmettant le signal de commande sans fil au récepteur (15) de l'unité de soufflet de suspension pneumatique (4) ou de l'unité de vanne (76).

11. Installation d'air comprimé de véhicule utilitaire (1) selon la revendication 10, **caractérisée en ce que**
a) l'unité de commande (20) du dispositif de commande (17) est munie d'une logique de commande qui
aa) génère plusieurs signaux de commande de niveau pour plusieurs soufflets de suspension pneumatiques (2) et
ab) génère un signal à partir des plusieurs signaux de commande de niveau,
b) l'émetteur (21) transmet au dispositif de commande (17) le signal avec les plusieurs signaux de commande de niveau pour plusieurs soufflets de suspension pneumatiques (2) et/ou
c) le récepteur (15) de l'unité de soufflet de suspension pneumatique (4) ou de l'unité de vanne (76) reçoit le signal dans lequel sont contenus plusieurs signaux de commande pour différents soufflets de suspension pneumatiques (2) et, dans l'unité de soufflet de suspension pneumatique (4) ou l'unité de vanne (76), est disposée une unité de commande (12) qui est munie d'une logique de commande qui détermine, à partir du signal avec les plusieurs signaux de commande, le signal de commande correspondant à l'unité de soufflet de suspension pneumatique (4) ou à l'unité de vanne (76).

12. Installation d'air comprimé de véhicule utilitaire (1) selon la revendication 10 ou 11, **caractérisée en ce que** l'unité de soufflet de suspension pneumatique (4) comprend un émetteur (16) pour la transmission sans fil d'un état de fonctionnement de l'unité de soufflet de suspension pneumatique (4).

13. Installation d'air comprimé de véhicule utilitaire (1) selon l'une des revendications 10 à 12, **caractérisée en ce que**
a) l'unité de commande (20) du dispositif de commande (17) est munie d'une logique de commande qui
aa) génère plusieurs signaux de commande de niveau pour plusieurs soufflets de suspension pneumatiques (2) et
ab) génère un signal à partir des plusieurs signaux de commande de niveau,
b) l'émetteur (21) transmet au dispositif de commande (17) le signal avec les plusieurs signaux de commande de niveau pour plusieurs soufflets de suspension pneumatiques (2) et/ou
c) le récepteur (15) de l'unité de soufflet de suspension pneumatique (4) ou de l'unité de vanne (76) reçoit le signal dans lequel sont contenus plusieurs signaux de commande pour différents soufflets de suspension pneumatiques (2) et, dans l'unité de soufflet de suspension pneumatique (4) ou l'unité de vanne (76), est disposée une unité de commande (12) qui est munie d'une logique de commande qui détermine, à partir du signal avec les plusieurs signaux de commande, le signal de commande correspondant à l'unité de soufflet de suspension pneumatique (4) ou à l'unité de vanne (76).

14. Installation d'air comprimé de véhicule utilitaire (1) selon l'une des revendications 10 à 13, **caractérisée en ce que**
a) l'unité de soufflet de suspension pneumatique (4) ou l'unité de vanne (76) est reliée avec deux soufflets de suspension pneumatiques (2), les deux raccordements correspondant à différents axes ou à différents côtés du véhicule utilitaire et/ou
b) une unité d'essieu relevable (35) ou une unité de soufflet porteur (34) étant constituée avec l'unité de soufflet de suspension pneumatique (4) ou l'unité de vanne (76).

15. Installation d'air comprimé de véhicule utilitaire (1) selon l'une des revendications 10 à 14, **caractérisée en ce que** le ou un récepteur (15 ; 22) de l'unité de soufflet de suspension pneumatique (4), de l'unité de vanne (76) ou du dispositif de commande (17) est conçu pour la réception sans fil d'un signal de mesure, introduit dans une ou dans l'unité de commande (12 ; 20), l'unité de commande (12 ; 20) étant munie d'une logique de commande qui envoie le signal de mesure àune unité modulaire externe par l'intermédiaire du ou d'un émetteur (16 ; 21).

16. Installation d'air comprimé de véhicule utilitaire (1) selon l'une des revendications 10 à 15, **caractérisée en ce que** l'unité de soufflet de suspension pneumatique (4), l'unité de vanne (76) ou le dispositif de commande (17) comprend au moins un élément d'actionnement manuel (81, 82, 83).

17. Installation d'air comprimé de véhicule utilitaire (1) selon l'une des revendications 10 à 16, **caractérisée en ce qu'**au moins un émetteur (21 ; 66) et/ou récepteur (22 ; 67) est disposé à distance de l'unité de commande (12 ; 20 ; 63) correspondante et est relié avec l'unité de commande (12 ; 20 ; 63) par l'intermédiaire d'une ligne (26).
